# EUROPÄISCHE PATENTSCHRIFT

(11) **EP 3 404 786 B1**
(45) Veröffentlichungstag und Bekanntmachung des Hinweises auf die Patenterteilung: **13.11.2019**
(21) Anmeldenummer: 17171445.4
(22) Anmeldetag: 17.05.2017
(51) Int. Cl.: B23K 26/38, H02G 1/12, B23K 26/06, B23K 26/10, B23K 26/082, B23K 101/38

(54) **LASERSCHNEIDEVORRICHTUNG FÜR GESCHIRMTE LEITUNGEN UND VERFAHREN ZUM LASERSCHNEIDEN VON GESCHIRMTEN LEITUNGEN MIT EINER SOLCHEN LASERSCHNEIDEVORRICHTUNG**
LASER CUTTING APPARATUS FOR SHIELDED LINES AND METHOD FOR LASER CUTTING OF SHIELDED LINES COMPRISING SUCH A LASER CUTTING APPARATUS
DISPOSITIF DE COUPE LASER POUR FILS BLINDÉS ET PROCÉDÉ DE COUPE LASER DE FILS BLINDÉS À L'AIDE D'UN TEL DISPOSITIF

(43) Veröffentlichungstag der Anmeldung: 21.11.2018
(60) Teilanmeldung: 19202222.6
(73) Patentinhaber: MD Elektronik GmbH, 84478 Waldkraiburg (DE)
(72) Erfinder: Mannherz, Herbert, 76703 Kraichtal (DE)
(74) Vertreter: Flach Bauer Stahl Patentanwälte Partnerschaft mbB

(56) Entgegenhaltungen:
- DE-A1-102008 024 136
- DE-U1-202012 004 424
- FR-A1- 2 690 015
- FR-A1- 2 728 735
- US-A- 4 135 902
- US-A- 4 456 811
- US-A- 5 208 434
- US-A1- 2016 161 672

## Beschreibung

Die Erfindung betrifft eine Laserschneidevorrichtung für geschirmte Leitungen und ein Verfahren zum Laserschneiden von geschirmten Leitungen mit einer solchen Laserschneidevorrichtung. Die erfindungsgemäße Laserschneidevorrichtung eignet sich insbesondere zum Ausführen von gleichmäßigen Umfangsschnitten an geschirmten Leitungen.

Um geschirmte Leitungen zu konfektionieren, also beispielsweise mit einem Steckverbinder zu versehen, sind in Abhängigkeit der Leiteranzahl und der unterschiedlichen Schichten, aus denen eine solche geschirmte Leitung besteht, eine Vielzahl von Arbeitsschritten notwendig. So müssen bei einer koaxialen Leitung nicht nur der zumindest eine Innenleiter oder bei einer HSD-Leitung (High Speed Data) die mehreren Innenleiter freigelegt werden, sondern es müssen auch die Außenleiter, bei denen es sich beispielsweise um Schirmdrähte und/oder Schirmfolien handelt, entsprechend freigelegt und derart angeordnet werden, dass ein so vorbereitetes Leitungsende mit einem Steckverbinder versehen werden kann.

Das Freilegen der einzelnen elektrischen Leitungen bzw. Adern einer geschirmten Leitung kann einerseits von Hand und andererseits maschinell geschehen. Die Qualität und der Durchsatz beim manuellen Entfernen der Schirmdrähte und/oder Schirmfolien sind dabei stark personenabhängig. Auch beim automatisierten Entfernen kann die Ausschussquote erheblich sein. Dies ist insbesondere deshalb der Fall, weil häufig zum Entfernen dieser Komponenten rotierende Messer verwendet werden, die einem sehr hohen Verschleiß unterliegen. Werden diese nicht rechtzeitig gewechselt, dann steigt die Ausschussquote an.

Aus der DE 20 2012 004424 U1 ist ein Abisoliergerät bekannt, mit dem insbesondere Lackdrähte mit zumindest einem Laser abisoliert werden können. Hierzu sind eine Reflektionseinrichtung und eine Bauteilhalterung vorgesehen, wobei mittels der Bauteilhalterung mindestens eine Aufnahmeachse ausgebildet ist, entlang der sich der Lackdraht erstreckt. Eine Leiteinrichtung umfasst zumindest einen beweglich gehaltenen Ablenkspiegel, mit dem der Laserstrahl auf mindestens einer vorgegebenen Bahn um die Aufnahmeachse bewegbar ist. Die Reflexionseinrichtung ist als ein sich ringförmig um die Aufnahmeachse erstreckendes Reflexionselement gebildet. Die Reflexionseinrichtung dient zur Umlenkung des bewegten Laserstrahles in eine etwa radial zur Aufnahmeachse ausgerichtete Strahlrichtung auf den zu entisolierenden Abschnitt der Lackdrahtoberfläche.

Die US 5 208 434 A beschreibt eine Vorrichtung um einen Draht zu härten. Die Vorrichtung umfasst hierzu eine Lasereinrichtung, die einen Laserstrahl erzeugt. Der Laserstrahl wird über mehrere Spiegel umgelenkt und einer Reflektionseinrichtung zugeführt. Die Reflektionseinrichtung ist im Längsschnitt zumindest teilweise konisch ausgeführt, wobei der zu härtende Draht entlang der Längsrichtung der Reflektionseinrichtung durch diese bewegt wird. Der Laserstrahl trifft dabei auf eine Innenwandung der Reflektionseinrichtung und wird von dieser auf den Draht reflektiert. Dadurch wird der Draht erhitzt und gehärtet.

In der US 4 456 811 A wird eine Vorrichtung beschrieben, um ein Werkstück aufzuheizen, damit dieses gehärtet werden kann. Die Vorrichtung umfasst hierzu eine Lasereinrichtung, die einen Laserstrahl erzeugt. Der Laserstrahl wird einer Reflektionseinrichtung zugeführt. Die Reflektionseinrichtung ist im Längsschnitt zumindest teilweise konisch ausgeführt, wobei das Werkstück von der Reflektionseinrichtung umgeben ist. Der Laserstrahl trifft dabei auf eine Innenwandung der Reflektionseinrichtung und wird von dieser auf das Werkstück reflektiert. Dadurch wird das Werkstück erhitzt und gehärtet.

Aus der US 2016/161672 A1 ist eine Vorrichtung bekannt, um unterschiedliche Schichten einer Glasfaser abzutragen. Die Vorrichtung umfasst einen Laser, dessen Wellenlänge derart gewählt ist, dass die zu entfernende Beschichtung für diesen als transparent anzusehen ist.

In der FR 2 690 015 A1 ist eine Vorrichtung zum Abisolieren von Kabeln mittels eines Lasers beschrieben. Der Laser ist dabei unbeweglich angeordnet. Über entsprechende Spiegeleinrichtungen kann der Laserstrahl in Teilstrahlen aufgeteilt werden, die an unterschiedlichen Stellen auf das abzuisolierende Kabel treffen.

Die US 4 135 902 A beschreibt eine Vorrichtung zum Ziehen einer optischen Glasfaser aus einer Schmelze, die lokal, unter Einwirkung eines umgelenkten Laserstrahls, aufgeschmolzen wird. Der Laserstrahl wird von zwei galvanisch angesteuerten Spiegeln aus Beryllium über einen feststehenden Spiegel auf einen frustrokonischen Reflektor geleitet und von diesem auf ein Rohteil, das sich dadurch erwärmt, um die optische Glasfaser abzuziehen.

Aus der FR 2 728 735 A1 ist eine Vorrichtung zum Entmanteln eines verschmutzen Kabels bekannt, das innerhalb eines dichten Gehäuses geführt wird, wobei das Gehäuse unter Unterdruck steht.

Um die Konfektionierung von geschirmten Leitungen zu erleichtern, schlägt die US 4 761 535 A vor, einen Laser zum Einschneiden von Kabeln zu verwenden. Der Laserstrahl wird über einen ersten Spiegel in Richtung des zu schneidenden Kabels reflektiert. Ein weiterer, gekrümmter Spiegel, ist im Strahlengang des Lasers nach dem Kabel angeordnet und reflektiert den Laserstrahl. Das Kabel ist auf einem Schlitten beweglich angeordnet. Durch die Bewegung des Schlittens wandert der Laserstrahl auf der Umfangswand des zu zerschneidenden Kabels. Durch den ersten Spiegel kann ein erster Teilbereich der Umfangswandung geschnitten werden und durch den zweiten Spiegel ein zweiter Teilbereich der Umfangswandung.

Nachteilig an der US 4 761 535 A ist, dass die Schnitte ungleichmäßig sind und der Laserprozess aufgrund der Verfahrgeschwindigkeit des Schlittens lange dauert.

Es ist daher die Aufgabe der hier vorliegenden Erfindung, eine Laserschneidevorrichtung für geschirmte Leitungen und ein Verfahren zum Laserschneiden von geschirmten Leitungen zu schaffen, durch die geschirmte Leitungen reproduzierbar und schnell eingeschnitten werden können, um eine weitestgehende oder vollständige Automatisierung bei der Konfektionierung dieser geschirmten Leitungen zu erreichen.

Die Aufgabe wird hinsichtlich der Laserschneidevorrichtungen für geschirmte Leitungen durch den Anspruch 1 und hinsichtlich des Verfahrens zum Laserschneiden durch den Anspruch 16 gelöst. Die Ansprüche 2 bis 15 erläutern erfindungsgemäße Weiterbildungen der Laserschneidevorrichtung und der Anspruch 17 erläutert eine erfindungsgemäße Weiterbildung des Verfahrens zum Laserschneiden.

Die erfindungsgemäße Laserschneidevorrichtung dient insbesondere zum Laserschneiden von Schirmdrähten und/oder Schirmfolien. Schirmdrähte bestehen dabei vorzugsweise ausschließlich aus einem Metall, wohingegen Schirmfolien vorzugsweise aus einem Kunststoff bestehen, der mit einem Metall, beispielsweise Aluminium mit einer Schichtdicke von vorzugsweise 10 bis 20 µm bedampft ist. Die Schirmfolie umfasst dabei vorzugsweise eine PET-Folie. Die Laserschneidevorrichtung umfasst außerdem eine Lasereinrichtung, die dazu ausgebildet ist, einen Laserstrahl zu erzeugen. Der Laserstrahl kann verschiedene Wellenlängen aufweisen. Beispielsweise kann er in einer Wellenlänge von 1060 nm bis 1064 nm oder 1600 nm arbeiten. Es wäre auch möglich, dass er in einer Wellenlänge von 10600 nm arbeitet. Die Lasereinrichtung kann daher die Wellenlänge entsprechend umstellen bzw. die Lasereinrichtung umfasst verschiedene Laser, die nacheinander zugeschaltet werden können.

Es ist außerdem eine Ringspiegelvorrichtung vorgesehen, die eine vorzugsweise vollständig umlaufende Spiegelwandung aufweist, durch die ein Schneideraum umgrenzt ist. Die Ringspiegeleinrichtung und damit auch die vorzugsweise vollständig umlaufende Spiegelwandung werden von einer Zentralachse durchsetzt. Der Wortlaut "umgrenzt" ist dahingehend zu verstehen, dass das Laserschneiden vorzugsweise innerhalb dieser Schneideraums stattfindet. Das Schneiden könnte, wie später noch erläutert wird, auch außerhalb dieses Schneideraums stattfinden. Die umlaufende Spiegelwandung ist an ihren Stirnseiten geöffnet, wodurch an der ersten Stirnseite eine Kabeleinführöffnung und an der zweiten Stirnseite eine Lasereintrittsöffnung gebildet ist. Der Schneideraum ist daher von außerhalb der umlaufenden Spiegelwandung aus über diese Öffnungen zugänglich. Eine geschirmte Leitung ist vorzugsweise entlang der Zentralsachse in dem Schneideraum anordenbar oder angeordnet. Die umlaufende Spiegelwandung ist dazu ausgebildet, den Laserstrahl in Richtung der geschirmten Leitung, also in Richtung der Zentralachse zu reflektieren, wobei sich die umlaufende Spiegelwandung um 360° um die Zentralachse herum erstreckt. Weiterhin ist eine Laserstrahl-Umlenkvorrichtung vorgesehen, die dazu ausgebildet ist, den Laserstrahl derart zu führen, dass der Laserstrahl durch die Lasereintrittsöffnung in den Schneideraum eintritt und auf die umlaufende Spiegelwandung trifft. Die Laserstrahl-Umlenkvorrichtung ist außerdem dazu ausgebildet, den Laserstrahl derart zu führen, dass sich dieser auf einer vorzugsweise geschlossenen (Bewegungs-)Bahn entlang der umlaufenden Spiegelwandung um 360° um die Zentralachse herum bewegt. Dadurch ist eine geschirmte Leitung, die im Bereich der Zentralachse, also entlang der Zentralachse innerhalb des Schneideraums anordenbar oder angeordnet ist, durch den an der umlaufenden Spiegelwandung reflektierten Laserstrahl entlang ihres gesamten Umfangs schneidbar. Besonders vorteilhaft ist dabei, dass eine Ringspiegeleinrichtung verwendet wird und dass der Laserstrahl durch die Laserstrahl-Umlenkvorrichtung auf einer vollständig geschlossenen Bahn entlang der umlaufenden Spiegelwandung um 360° um die Zentralachse herumführbar ist. Die umlaufende Spiegelwandung ist segmentiert, wodurch die Bahn, um die der Laserstrahl entlang der umlaufenden Spiegelwandung um 360° um die Zentralachse herum bewegbar ist, unterbrochen ist. Dadurch werden alle Stellen am Umfang der geschirmten Leitung gleichmäßig durch den Laserstrahl eingeschnitten. Die Energieverteilung an dem Umfang der geschirmten Leitung ist konstant über den Umfang. Dadurch ist sichergestellt, dass der Schneideprozess gleichmäßig erfolgt und nicht bestimmte Schichten der geschirmten Leitung bereits durchschnitten sind, wohingegen diese Schichten an einem anderen Bereich des Umfangs nur teilweise eingeschnitten sind, wie es beim Stand der Technik der Fall wäre. Dadurch können Beschädigungen unterhalb zu zerschneidenden Schicht zuverlässig vermieden werden. Grundsätzlich könnte die (Bewegungs)Bahn auch unterbrochen sein. Dies wäre z.B. bei einer in Umfangsrichtung segmentierten Spiegelwandung möglich. Hier wird der Laserstrahl entsprechend der Anzahl der Flächen (Facetten) der Spiegelwandung in geradlinigen Bahnen geführt.

In einer bevorzugten Weiterbildung umfasst die Laserstrahl-Umlenkvorrichtung zumindest eine erste und eine zweite Spiegelanordnung, sowie zumindest eine erste und eine zweite Verstelleinrichtung. Bei den Verstelleinrichtungen handelt es sich vorzugsweise um Elektromotoren und/oder um Piezoaktoren. Die Spiegelanordnungen sind dabei im Strahlengang des Laserstrahls angeordnet und dazu ausgebildet, den Laserstrahl entlang einer geschlossenen Umlaufbahn, also entlang der umlaufenden Spiegelwandung um 360° um die Zentralachse herum zu bewegen. Vorzugsweise wird der Laserstrahl von der ersten Spiegelanordnung zur zweiten Spiegelanordnung reflektiert und von der zweiten Spiegelanordnung (oder der letzten Spiegelanordnung) zur umlaufenden Spiegelwandung. Die Laserstrahl-Umlenkvorrichtung kann noch weitere Spiegelanordnungen umfassen. Die erste Verstelleinrichtung ist dabei dazu ausgebildet, die erste Spiegelanordnung derart zu verdrehen und/oder zu verschwenken, dass der Laserstrahl überwiegend oder ausschließlich entlang der Y-Achse verstellt oder bewegt wird. In diesem Fall ist die zweite Verstelleinrichtung dazu ausgebildet, die zweite Spiegelanordnung derart zu verdrehen und/oder zu verschwenken, dass der Laserstrahl überwiegend oder ausschließlich entlang der Z-Achse verstellt bzw. bewegt wird. In einer anderen Ausführungsform kann die erste Verstelleinrichtung den Laserstrahl überwiegend oder ausschließlich entlang der Z-Achse und die zweite Verstelleinrichtung den Laserstrahl überwiegend oder ausschließlich entlang der Y-Achse verstellen oder bewegen. Dabei ist es wichtig, dass die Y-Achse und die Z-Achse in einem Winkel 90° zueinander stehen und dass die beiden Achsen wiederum in einem Winkel von 90° zur X-Achse stehen, wobei die X-Achse entlang der Zentralachse verläuft. Dadurch ist es möglich, dass der Laserstrahl sehr schnell (mehrere Umrundungen pro Sekunde) entlang der umlaufenden Spiegelwandung um die Zentralachse herum geführt wird. Die geschirmte Leitung kann dabei sehr genau mit einem geringen Energieeintrag pro Umdrehung geschnitten werden. Ein solcher Schneidvorgang erfordert, dass der Laserstrahl mehrfach, vorzugsweise mehr als 10, 20, 30, 40, 50, 60, 70, 80, 90 oder mehr als 100 mal auf einer umlaufenden Bahn entlang der umlaufenden Spiegelwandung geführt wird.

Grundsätzlich wäre es auch möglich, dass die Laserstrahl-Umlenkvorrichtung auch einen Roboterarm umfasst, der den Laserstrahl führt.

In einer weiteren bevorzugten Ausführungsform verläuft die Zentralachse der umlaufenden Spiegelwandung durch die letzte Spiegelanordnung, in diesem Fall durch die zweite Spiegelanordnung. Die umlaufende Spiegelwandung hat dabei einen Querschnitt, der in Draufsicht vorzugsweise die Form eines Kreises aufweist. Dadurch ist gewährleistet, dass der Schnitt besonders präzise und reproduzierbar an der gesamten Umfangswandung der geschirmten Leitung stattfindet.

Für den Fall, dass die umlaufende Spiegelwandung einen kreisförmigen Querschnitt aufweist, bewegt sich der Laserstrahl auf einer kreisförmigen Umfangsbahn bzw. Bewegungsbahn, also entlang der kreisförmig verlaufenden umlaufenden Spiegelwandung um die Zentralachse herum. Die kreisförmige Bewegungsbahn ist dabei nicht unterbrochen, also unterbrechungsfrei ausgeführt.

In einer anderen Ausführungsform weist die Lasereintrittsöffnung einen größeren Querschnitt auf als die Kabeleinführöffnung. Die umlaufende Spiegelwandung verjüngt sich dabei zumindest über eine Teillänge entlang der Zentralachse von der Lasereintrittsöffnung hin zur Kabeleinführöffnung. Der Verlauf ist dabei vorzugsweise konus- bzw. trichterförmig. Die Lasereintrittsöffnung hat vorzugsweise einen Durchmesser von weniger als 20 cm, 15 cm, 10 cm aber vorzugsweise von mehr als 5 cm, 8 cm, 13 cm, 17 cm, 25 cm.

Besonders bevorzugt ist die umlaufende Spiegelwandung in mehrere vollständig umlaufende Segmente gegliedert, die entlang der Zentralachse benachbart zueinander angeordnet sind, wobei zwei benachbarte umlaufende Segmente winklig zueinander verlaufen. Dies hat mehrere Vorteile. Zum einen wird ein Laserstrahl, der auf ein umlaufendes Segment trifft, an einer anderen, entlang der Zentralachse versetzt liegenden Stelle auf die Leitung reflektiert, verglichen mit einem Laserstrahl, der auf ein anderes umlaufendes Segment trifft. Dadurch können auf sehr einfache Art und Weise, nämlich nur durch Ansteuerung der Laserstrahl-Umlenkvorrichtung auf unterschiedliche Segmente unterschiedliche entlang der Zentralachse versetzt zueinander liegende Stellen an der geschirmten Leitung geschnitten werden. Die Leitung selbst muss dabei nicht bewegt werden. Andererseits wird ein Laserstrahl, der auf ein umlaufendes Segment trifft, in einem anderen Winkel auf die geschirmte Leitung reflektiert, verglichen mit einem Laserstrahl, der auf ein anderes umlaufendes Segment trifft. Dadurch können unterschiedliche Arten von Schnitten sicher durchgeführt werden. Die umlaufenden Segmente sind vorzugsweise kegelstumpfförmig gestaltet. Dies bedeutet, dass in einem Längsschnitt durch die Ringspiegeleinrichtung die einzelnen umlaufenden Segmente die Form einer Geraden aufweisen bzw. auf eine Gerade abgebildet sind.

In einer weiteren erfindungsgemäßen Ausführungsform umfasst die Laserschneidevorrichtung noch eine Transporteinrichtung, welche dazu ausgebildet ist, die Leitung zu halten und diese in den Schneideraum zu fahren. Die Transporteinrichtung und die Ringspiegeleinrichtung sind während des Laserschneidens entweder relativ unverschiebbar zueinander angeordnet oder vorzugsweise beide insgesamt ortsfest angeordnet. Dies ist bei dem Stand der Technik gerade eben nicht der Fall, wo ein Schlitten das zu schneidende Kabel fortlaufend bewegen muss, um einen Umfangsschnitt an einer einzigen Stelle realisieren zu können.

In einer weiteren bevorzugten Ausführungsform ist noch ein Befestigungsgehäuse vorgesehen, in dem die Ringspiegeleinrichtung angeordnet bzw. befestigt ist. Das Befestigungsgehäuse weist dabei eine erste Gehäuseöffnung auf, über die die Kabeleinführöffnung zugänglich ist. Über eine zweite Gehäuseöffnung ist die Lasereintrittsöffnung zugänglich. Weiterhin gibt es noch verschiedene Vorteile. Beispielsweise kann die zweite Gehäuseöffnung mit einem optischen Fenster, insbesondere einem Quarzglas, verschlossen sein, wobei das optische Fenster für die Wellenlänge des Lasers transparent (> 90% der Leistung, > 95% der Leistung, > 98% der Leistung, > 99% der Leistung des Lasers werden transmittiert) ist und wobei das optische Fenster in der Mitte eine Öffnung aufweist, die zum Halten bzw. zur Zentrierung der geschirmten Leitung dient. Andererseits kann an dem optischen Fenster auch eine Zentrier- und/oder Halteeinrichtung angeordnet ist, in die die geschirmte Leitung zur Befestigung einführbar oder eingeführt ist.

Weiterhin kann in dem Bereich der zweiten Gehäuseöffnung auch eine Düseneinrichtung angeordnet sein, die dazu ausgebildet ist, Luft oder ein Prozessgas auf die umlaufende Spiegelwandung zu blasen. Dadurch beschleunigt sich nicht nur der Schneidevorgang, sondern die umlaufende Spiegelwandung wird gleichzeitig auch gekühlt und von Rückständen befreit. Gleichzeitig ist es auch möglich, dass im Bereich der ersten Gehäuseöffnung zumindest eine Absaugvorrichtung angeordnet ist, die dazu ausgebildet ist, die durch den Laserschneideprozess entstehenden Emissionen und/oder die abgeschnittenen Teile der geschirmten Leitung einzusaugen. Dadurch ist gewährleistet, dass ein hoher Durchsatz an zu schneidenden geschirmten Leitungen erreicht werden kann.

Das erfindungsgemäße Verfahren zum Laserschneiden mit einer solchen Laserschneidevorrichtung umfasst mehrere Verfahrensschritte. In einem ersten Verfahrensschritt wird die geschirmte zu schneidende Leitung entsprechend vorbereitet. Hierunter sind insbesondere die Schritte zu verstehen, die das Freilegen der entsprechenden zu schneidenden Schichten vorsehen. In einem weiteren Verfahrensschritt wird die Leitung in den geschirmten Schneideraum eingeführt, so dass in einem darauf folgenden Schritt der Laserstrahl durch die Lasereintrittsöffnung in den Schneideraum eintreten kann und auf die umlaufende Spiegelwandung trifft. In einem weiteren Schritt wird der Laserstrahl (permanent) derart geführt, dass sich dieser entlang der umlaufenden Spiegelwandung um 360° um die Zentralachse herum bewegt, also dass sich eine geschlossene Bewegungsbahn des Laserstrahls ergibt, wobei der Laserstrahl auf die geschirmte Leitung reflektiert wird und diese entlang ihres Umfangs schneidet. Besonders vorteilhaft ist, dass keine Bewegung der geschirmten Leitung notwendig ist und gleichzeitig ein optimales Schneideergebnis erzielt wird, weil jede Stelle im Schneidebereich der Umfangsleitung der geschirmten Leitung über eine gleiche Zeitdauer mit der gleichen Laserleistung und den gleichen optischen Verhältnissen beleuchtet wird.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
- Figuren 1A und 1B:: einen beispielhaften Aufbau einer Koaxialleitung und einer HSD-Leitung;
- Figuren 2A und 2B:: verschiedene Schritte, die Erläutern wie eine Koaxialleitung und ein HSD-Leitung vorbereitet werden und welche Teile der jeweiligen Leitung in einem Laserschneideverfahren abgeschnitten werden;
- Figur 3:: eine geschirmte Leitung, deren Schirmdrähte und deren Schirmfolie geschnitten wurde;
- Figuren 4A und 4B:: ein Ausführungsbeispiel der erfindungsgemäßen Laserschneidevorrichtung mit einer Ringspiegeleinrichtung und einer Laserstrahl-Umlenkvorrichtung, wobei der Laserstrahl die Leitung entlang ihres gesamten Umfangs an verschiedenen Stellen schneidet;
- Figur 5A:: ein Längsschnitt durch ein Ausführungsbeispiel der Ringspiegeleinrichtung;
- Figuren 5B und 5C:: verschiedene Querschnitte von unterschiedlichen Ausführungsbeispielen der Ringspiegeleinrichtung;
- Figur 5D:: eine räumliche Darstellung eines weiteren Ausführungsbeispiels der Ringspiegeleinrichtung;
- Figur 6:: ein weiteres Ausführungsbeispiel der erfindungsgemäßen Laserschneidevorrichtung mit einem Befestigungsgehäuse, einer Absaugvorrichtung und einer Düseneinrichtung; und
- Figuren 7A bis 7C:: verschiedene Ablaufdiagramme, die ein erfindungsgemäßes Verfahren zum Laserschneiden von geschirmten Leitungen näher erläutert.

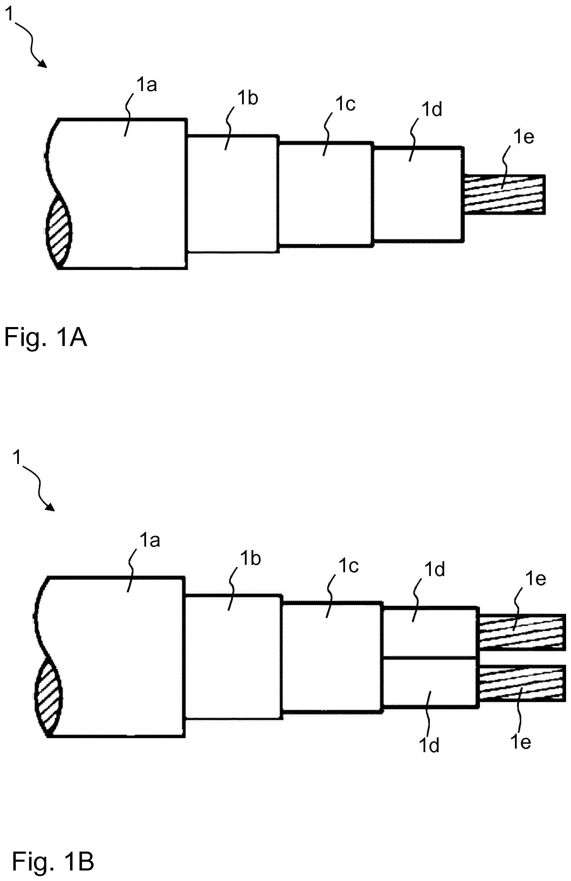

Die Figuren 1A und 1B zeigen verschiedene Ausführungsbeispiele einer geschirmten Leitung 1, die mit einer später beschriebenen Laserschneidevorrichtung 3 geschnitten werden. In Figur 1A ist eine geschirmte Leitung 1 in Form einer Koaxialleitung dargestellt. Diese umfasst einen Außenmantel 1a, der vorzugsweise aus einem (elastischen) Dielektrikum wie Kunststoff besteht. Unter diesem Außenmantel sind Schirmdrähte 1b angeordnet, die auch als Schirmdrahtgeflecht bezeichnet werden können. Diese Schirmdrähte 1b bestehen aus einem Metall und sind elektrisch leitfähig. Unter diesen Schirmdrähten 1b bzw. dem Schirmdrahtgeflecht befindet sich vorzugsweise eine Schirmfolie 1c. Diese Schirmfolie 1c umfasst vorzugsweise ein dielektrisches Material, insbesondere eine Kunststofffolie (z.B. PET-Folie), auf die ein Metall aufgedampft bzw. aufgesputtert wurde. Die Schichtdicke dieses Metalls, bei dem es sich beispielsweise um Aluminium handeln kann, beträgt vorzugsweise 10 µm bis 20 µm.

Unterhalb dieser Schirmfolie 1c ist ein Dielektrikum 1d angeordnet, welches aus einem elektrischen Isolator, insbesondere einem (elastischen) Kunststoff besteht. Dieses Dielektrikum 1d umgibt einen Innenleiter 1e, der aus einem elektrisch leitfähigen Material wie z.B. Kupfer besteht oder ein solches umfasst.

In Figur 1B ist dagegen eine HSD-Leitung 1 dargestellt. Der Aufbau bezüglich des Außenmantels 1a, der Schirmdrähte 1b und der Schirmfolie 1c entspricht demjenigen Aufbau der Koaxialleitung 1 aus Figur 1A. Anstelle eines Dielektrikums 1d, welches einen Innenleiter 1e umfasst, umgibt die Schirmfolie 1c in Figur 1B mehrere Dielektrika 1d, wobei jedes dieser Dielektrika 1d einen Innenleiter 1e umfasst, also umgibt. Die HSD-Leitung 1 aus Figur 1B umfasst daher mehrere Innenleiter 1e, vorzugsweise 2, 3, 4, 5, 6, 8, 10 oder mehr Innenleiter 1e, wobei jeder Innenleiter 1e von einem eigenen Dielektrikum 1d umgeben ist. Die Dielektrika 1d sind dann gemeinsam von der Schirmfolie 1c umgeben. Ein solcher Aufbau erlaubt einen höheren Datensatz, insbesondere wenn ein differentielles Signal wie beispielsweise LVDS (engl. low voltage differential signalling) verwendet wird.

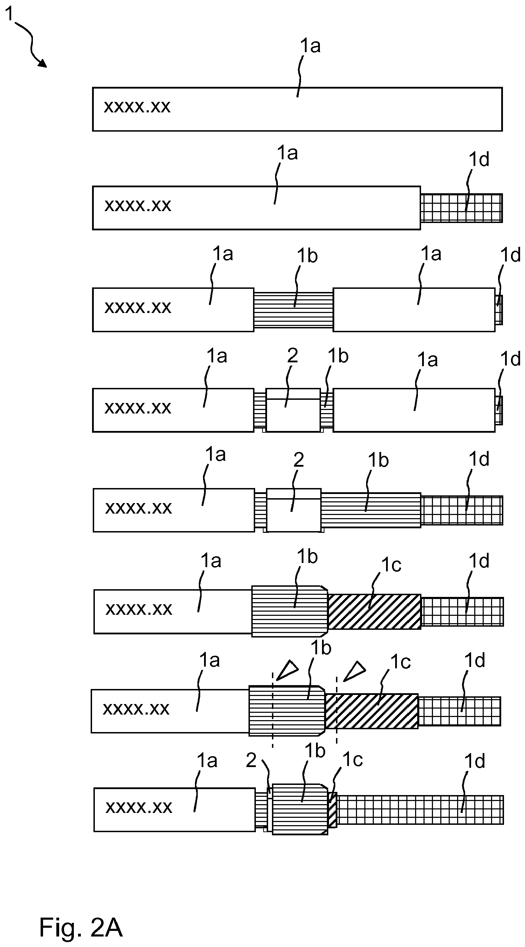

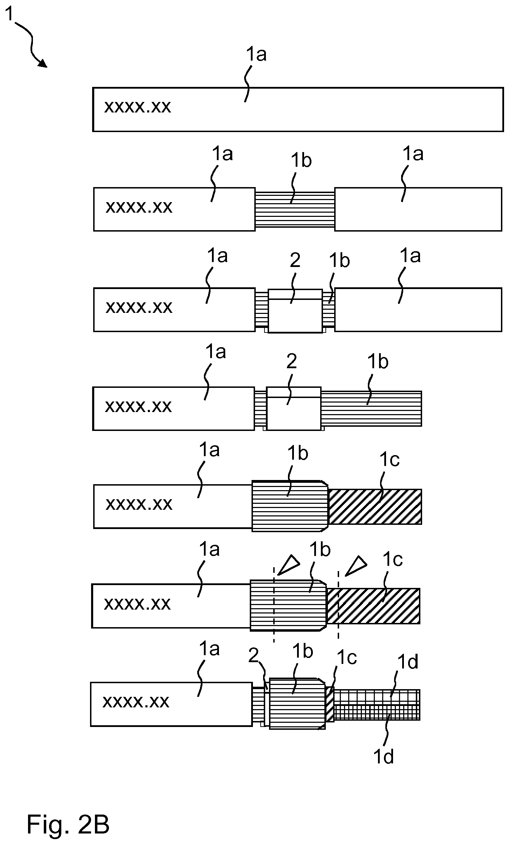

Wie einleitend erwähnt, ist es das Ziel dieser Erfindung, die geschirmte Leitung 1 möglichst vollautomatisch konfektionieren, also mit einem Steckverbinder, versehen zu können. Hierzu müssen bestimmte Schichten freigelegt werden, in die unterschiedliche Teile einer nicht dargestellten Steckverbindung eingreifen und diese elektrisch kontaktieren. Dieser Sachverhalt wird im Hinblick auf die Figuren 2A und 2B genauer erläutert.

Figur 2A zeigt eine geschirmte Leitung 1 in Form einer Koaxialleitung 1, wie diese bereits bezüglich ihres Aufbaus in Figur 1A dargestellt wurde, worauf hiermit verwiesen wird. Um die geschirmte Leitung 1 entsprechend konfektionieren zu können, wird die geschirmte Leitung 1 wie nachfolgend erläutert verarbeitet, also zur Konfektionierung vorbereitet. Die einzelnen Verarbeitungsschritte verlaufen von oben nach unten. Zu Beginn kann die geschirmte Leitung 1 beschriftet werden (optional).

Dies hier mit der Beispielbeschriftung "XXXX.XX" kenntlich gemacht. Dargestellt ist der Außenmantel 1a. Die geschirmte Leitung 1 wird dabei auf eine bestimmte Länge hin zugeschnitten.

Danach wird der Außenmantel 1a und darunter liegenden Schichten bis auf das Dielektrikum 1d auf eine vorgegebene Abmantellänge eingeschnitten und abgezogen. Zum Vorschein kommt das Dielektrikum 1d.

Danach wird der Außenmantel 1a wiederum auf eine vorgegebene Abmantellänge eingeschnitten und das Abfallstück des Außenmantels 1a wird teilabgezogen, so dass die darunter liegenden Schirmdrähte 1b zum Vorschein kommen. Auf diese sichtbaren Schirmdrähte 1b wird ein Stützcrimp 2 bzw. eine Stützhülse 2 aufgepresst. Dieser Stützcrimp 2 ist dabei vorzugsweise axial unverschieblich an der geschirmten Leitung 1 angeordnet.

Im weiteren Schritt wird das Abfallstück des Außenmantels 1a vollständig entfernt.

Danach werden die Schirmdrähte 1b über den Stützcrimp bzw. die Stützhülse zurück-, also umgeklappt. Die unter den Schirmdrähten 1b liegende Schirmfolie kommt daher zum Vorschein.

Im nächsten Schritt werden die Schirmdrähte 1b und/oder die Schirmfolie 1c entsprechend mittels eines Lasers eingeschnitten und gekürzt. Der Laserschnitt findet bei den Schirmdrähten 1b dort statt, wo sich unterhalb der Schirmdrähte 1b der Stützcrimp 2 bzw. die Stützhülse 2 befindet. Die abgeschnittenen Schirmdrähte 1b werden entfernt und/oder die abgeschnittene Schirmfolie 1c wird abgezogen. Daraus ergibt sich die in Figur 2A ganz unten dargestellte Abbildung der geschirmten Leitung 1. Die dort dargestellte geschirmte Leitung 1 kann zur weiteren Konfektionierung verwendet werden.

Die erfindungsgemäße Laserschneidevorrichtung 3 dient, wie später noch erläutert wird, dazu, die Schirmdrähte 1b und die Schirmfolie 1c zu schneiden. In Figur 2A ist ein solcher Trenn(umfangs)schnitt gestrichelt dargestellt. Dieser Schnitt findet an dem gesamten Umfang der geschirmten Leitung 1 statt, wobei durch diesen Schnitt lediglich die Schirmdrähte 1b bzw. lediglich die Schirmfolie 1c durchschnitten wird. Die darunterliegenden Schichten bleiben unbeschädigt bzw. werden nicht durchschnitten. Die Schnittbreite ist vorzugsweise kleiner als 2 mm oder kleiner als 1,5 mm oder kleiner als 1 mm oder kleiner als 0,5 mm. Das Schneiden findet nur an genau einer Stelle am Umfang der geschirmten Leitung 1 zur selben Zeit statt.

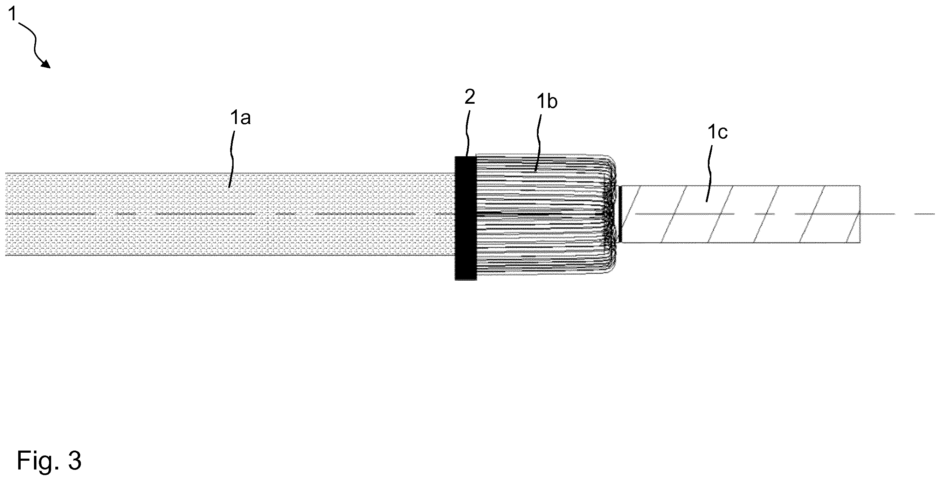

In Figur 3 ist eine geschirmte Leitung 1 in Form einer Koaxialleitung genauer gezeigt. Dargestellt sind die durchgeführten Trennschnitte mittels der Laserschneidevorrichtung 3. Die Schirmdrähte 1b sind gekürzt und die Schirmfolie 1c ist eingeschnitten.

Die Figur 2B zeigt dagegen wie eine mehradrige geschirmte Leitung 1 für die Konfektionierung vorbereitet wird. Bei dieser geschirmten Leitung 1 handelt es sich vorzugsweise um eine HSD-Leitung 1, wie diese im Hinblick auf Figur 1B erläutert worden ist, worauf hiermit Bezug genommen wird. Die Schritte sind dabei in etwa dieselben wie bei der Koaxialleitung 1 aus Figur 2A. Lediglich zu Beginn ist fraglich, ob der Außenmantel 1a mit den Schirmdrähten 1b bzw. dem Schirmgeflecht 1b und der Schirmfolie 1c vollständig abgezogen werden muss oder ob es nicht reicht, dass der Außenmantel 1a eingeschnitten und entsprechend teilabgezogen wird, so dass die Schirmdrähte 1b zum Vorschein kommen, auf die das Stützcrimp 2 bzw. die Stützhülse 2 aufgesetzt wird. In der letzten Abbildung in Figur 2B sind die unterschiedlichen Dielektrika 1d zu erkennen, die die einzelnen Innenleiter 1e umschließen. Der Trennschnitt wird, wie bereits erläutert, mittels der erfindungsgemäßen Laserschneidevorrichtung 3 an derselben Stelle durchgeführt wie bei der geschirmten koaxialen Leitung 1 aus Figur 2A, worauf hiermit verwiesen wird.

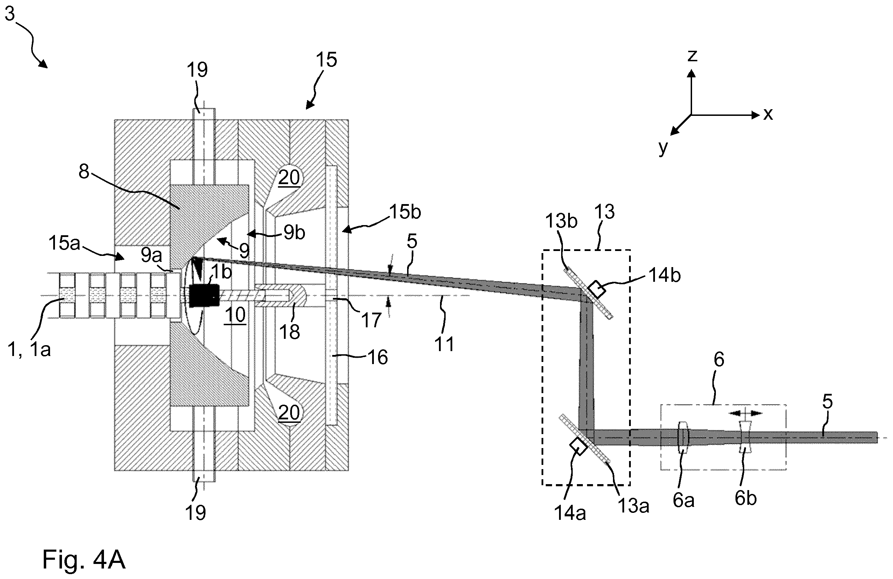

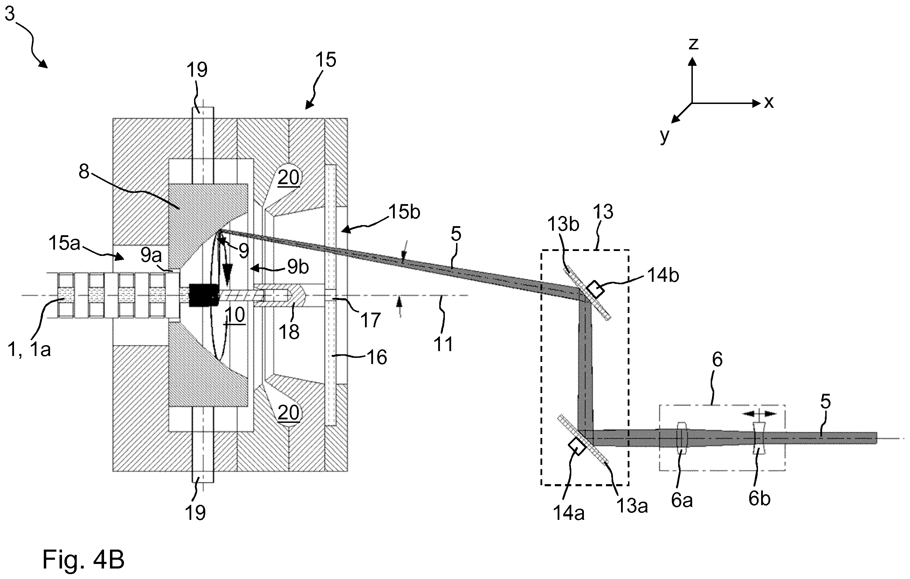

Die Figuren 4A und 4B zeigen ein Ausführungsbeispiel der erfindungsgemäßen Laserschneidevorrichtung 3, wobei in Figur 4A die Schirmdrähte 1b und in Figur 4B die Schirmfolie 1c geschnitten wird.

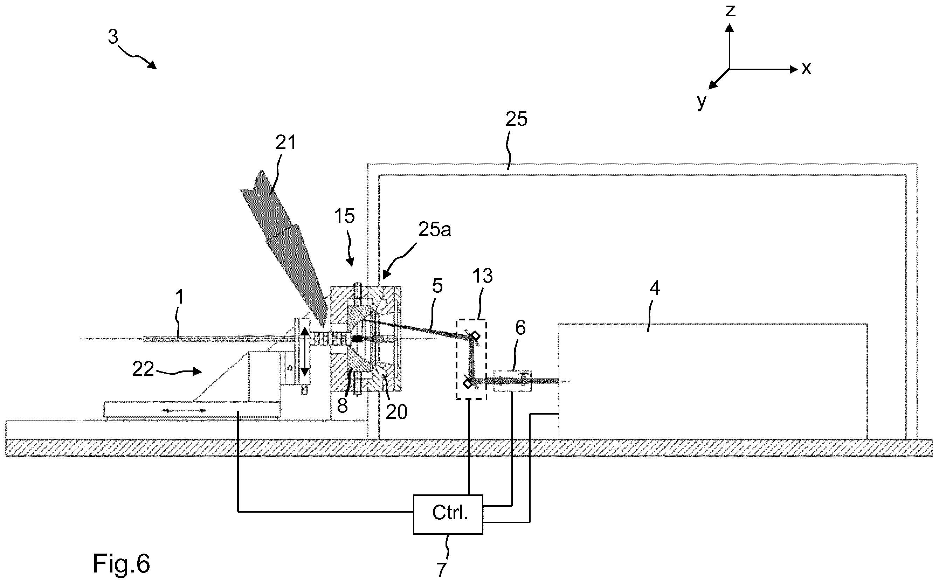

Die Laserschneidevorrichtung 3 umfasst zumindest eine Lasereinrichtung 4 (s. Figur 6), die dazu ausgebildet ist, einen Laserstrahl 5 zu erzeugen. Dieser Laserstrahl 5 kann unterschiedliche Wellenlängen aufweisen. Vorzugsweise werden die Schirmdrähte 1b mit einem Laserstrahl 5 geschnitten, der eine andere Wellenlänge aufweist als derjenige Laserstrahl 5, mit dem die Schirmfolie 1c geschnitten wird. Die Schirmdrähte 1b werden vorzugsweise mit einem Festkörper-Laser wie beispielsweise einem Fiber-Laser, Scheiben-Laser oder UKP-Laser geschnitten, der eine Wellenlänge im Infrarotbereich von beispielsweise 1060 bis 1064 nm oder 1600 nm aufweist. Die teilweise aus Kunststoff bestehende Schirmfolie 1c wird in Abhängigkeit der Seite, auf welcher das Metall bzw. Metallsubstrat aufgebracht ist, mit einem Festkörper-Laser oder einem Gas-Laser geschnitten. Ein Festkörper-Laser wird insbesondere dann verwendet, wenn das Metall bzw. das Metallsubstrat auf der Seite der Schirmfolie aufgebracht ist, die nach außen, also weg von dem Kabelinneren zeigt. Andernfalls wird bevorzugt ein Gas-Laser, vorzugweise ein CO₂-Laser verwendet, der eine Wellenlänge von ca. 10600 nm aufweist. Durch einen Festkörper-Laser wird das Metall bzw. das aufgedampfte bzw. aufgesputterte Metallsubstrat aufgewärmt, so dass dieses die darunterliegende Folie durchtrennt. Dies gelingt unabhängig davon wie die Schirmfolie 1c aufgebracht ist. Diese kann beispielsweise teilweise überlappend oder gewickelt aufgebracht sein. Ähnlich ist auch die Funktionsweise bei Verwendung eines Gas-Lasers.

Weiterhin ist eine Teleskopeinrichtung 6 vorgesehen, die vorzugsweise am Ausgang der Lasereinrichtung 4, also im Strahlengang des Laserstrahls 5 angeordnet ist. Die Teleskopeinrichtung 6 ist dazu ausgebildet, die Fokussierung des Laserstrahls 5 zu ändern, wodurch auf unterschiedliche Durchmesser und/oder Arbeitsabstände der geschirmten Leitung 1 durch Verschieben der Spiegelpositionen in der Teleskopeinrichtung reagiert werden kann. Ist die Leitung 1 dünner, so kann die TelesKopplungeinrichtung 6 derart angesteuert werden, dass sich die Fokussierung des Laserstrahls 5 so verändert, dass dieser auf der geschirmten Leitung 1 mit ihrem verringerten Durchmesser fokussiert ist. Gleiches gilt auch bei einer dickeren Leitung 1. Die Teleskopeinrichtung 6 wird vorzugsweise von einer Steuereinrichtung 7 (s. Figur 6) angesteuert. Diese Steuereinrichtung 7 steuert ebenfalls die Lasereinrichtung 4 (Laserleistung, Aktivieren bzw. Deaktivieren, Wellenlänge).

Die Teleskopeinrichtung 6 kann dabei aus verschiedenen Linsen 6a, 6b bestehen, die relativ zueinander bewegt werden können.

Die Laserschneidevorrichtung 3 umfasst außerdem eine Ringspiegeleinrichtung 8, die eine vollständig umlaufende Spiegelwandung 9 aufweist, die einen Schneideraum 10 umgrenzt und von einer Zentralachse 11 durchsetzt ist. Die umlaufende Spiegelwandung 9 ist an ihren Stirnseiten 9a, 9b geöffnet, wodurch an einer ersten Stirnseite 9a eine Kabeleinführöffnung 9a und an der zweiten Stirnseite 9b eine Lasereintrittsöffnung 9b gebildet ist. Durch diese Öffnungen 9a, 9b ist der Schneideraum 10 von außerhalb der umlaufenden Spiegelwandung 9 aus zugänglich.

Eine mit dem Laserstrahl 5 zu schneidende geschirmte Leitung 1 ist entlang der Zentralachse 11 in dem Schneideraum 10 angeordnet. In den Figuren 4A, 4B und 6 ist die in den Figuren 1A und 2A bzw. 1B und 2B gezeigte geschirmte Leitung 1 angeordnet. Die Zentralachse 11 verläuft vorzugsweise durch eine Längsachse der geschirmten Leitung 1, fällt also mit einer Längsachse der geschirmten Leitung 1 zusammen. Die Längsachse der geschirmten Leitung 1 könnte auch um vorzugsweise weniger als 5 cm, 3 cm, 2 cm, 1 cm, 0,5 cm von der Zentralachse 11 beabstandet sein. Die geschirmte Leitung 1 wäre dann immer noch "im Bereich" der Zentralachse 11 angeordnet.

Die umlaufende Spiegelwandung 9 ist dazu ausgebildet, den Laserstrahl 5 in Richtung der geschirmten Leitung 1 zu reflektieren. Diese umlaufende Spiegelwandung 9 ist in Umfangsrichtung, also um die Zentralachse 11 herum vorzugsweise vollständig geschlossen. Sie erstreckt sich also um 360° um die Zentralachse 11 herum.

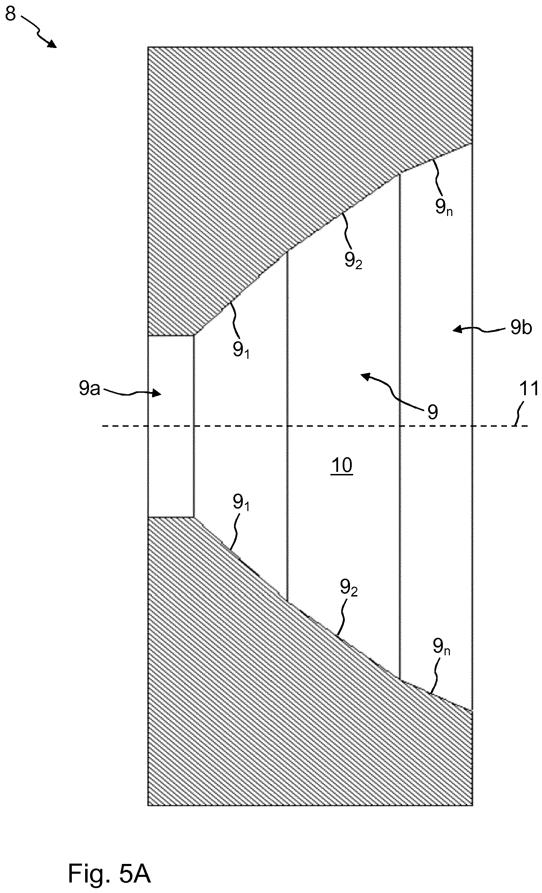

Je nachdem auf welchen Bereich der umlaufenden Spiegelwandung 9 der Laserstrahl 5 trifft, wird dieser Laserstrahl 5 auf eine unterschiedliche Stelle (in axialer Richtung und in Umgangsrichtung) der geschirmten Leitung 1 reflektiert. Die unterschiedlichen Stellen sind dabei in Richtung der Zentralachse 11 voneinander beabstandet. Es können daher in Umfangsrichtung der geschirmten Leitung 1 versetzt zueinander liegende Schnitte in die geschirmte Leitung 1 eingebracht werden, die sich entlang der gesamten Umfangsrichtung der geschirmten Leitung 1 erstrecken. Dieser Sachverhalt wird im weiteren Verlauf mit Hinblick auf Figur 5A genauer erläutert.

Damit der Laserstrahl 5 auf unterschiedliche Bereiche der umlaufenden Spiegelwandung 9 treffen kann, ist eine Laserstrahl-Umlenkvorrichtung 13 vorgesehen. Diese Laserstrahl-Umlenkvorrichtung 13 ist dazu ausgebildet, den Laserstrahl 5 derart zu führen, so dass der Laserstrahl 5 durch die Lasereintrittsöffnung 9b in den Schneideraum 10 eintritt und auf die umlaufende Spiegelwandung 9 trifft. Die Laserstrahl-Umlenkvorrichtung 13 kann auch als Scanner-System bezeichnet werden.

Damit der Laserstrahl 5 die geschirmte Leitung 1 entlang ihrer gesamten Umfangsrichtung über eine bestimmte Breite einschneiden kann, ist die Laserstrahl-Umlenkvorrichtung 13 weiter dazu ausgebildet, den Laserstrahl 5 derart zu führen, dass sich dieser entlang der umlaufenden Spiegelwandung 9 um 360° um die Zentralachse 11 herum bewegt. Dies bedeutet, dass der Laserstrahl 5 auf der umlaufenden Spiegelwandung 9 eine zweidimensionale Bahn beschreitet bzw. beschreibt.

In anderen Worten bedeutet dies, dass für den Fall, dass die Zentralachse 11 auch als X-Achse bezeichnet wird, der Laserstrahl 5 auf der umlaufenden Spiegelwandung 9 lediglich in Y-Richtung und Z-Richtung bewegt wird, wobei die Y- und die Z-Achse senkrecht aufeinander stehen und wobei beide Achsen wiederum senkrecht zur X-Achse, also zur Zentralachse 11 stehen.

Im einfachsten Fall kann es sich bei der Laserstrahl-Umlenkvorrichtung 13 um einen Roboterarm handeln. Vorzugsweise umfasst die Laserstrahl-Umlenkvorrichtung allerdings zumindest eine erste Spiegelanordnung 13a und eine zweite Spiegelanordnung 13b, sowie zumindest eine erste Verstelleinrichtung 14a und eine zweite Verstelleinrichtung 14b. Die Spiegelanordnungen 13a, 13b sind dabei im Strahlengang des Laserstrahls 5 angeordnet. Der Laserstrahl 5 trifft dabei zuerst auf die erste Spiegelanordnung 13a und wird von der ersten Spiegelanordnung 13a zur nächsten, in diesem Fall zur zweiten und letzten Spiegelanordnung 13b reflektiert. In der zweiten Spiegelanordnung 13b wird der Laserstrahl 5 weiter in Richtung der umlaufenden Spiegelwandung 9 reflektiert. Die zweite Spiegelanordnung 13b liegt dabei in der Zentralachse 11 der umlaufenden Spiegelwandung 9. Die Zentralachse 11 verläuft daher durch die zweite Spiegelanordnung 13b.

Beide Spiegelanordnungen 13a, 13b können eine rechteckige oder runde Spiegelfläche aufweisen, die beispielsweise das gleiche Material umfasst wie die umlaufende Spiegelwandung 9 der Ringspiegeleinrichtung 8.

Die beiden Spiegelanordnungen 13a, 13b bzw. alle Spiegelanordnungen 13a, 13b sind vorzugsweise in einer gemeinsamen Ebene angeordnet. Diese Ebene verläuft vorzugsweise senkrecht zur Zentralachse 11. In diesem Fall sind die beiden Spiegelanordnungen 13a, 13b in Y-Richtung oder in Z-Richtung oder in Z-Richtung und Y-Richtung versetzt zueinander angeordnet.

Die Verstelleinrichtungen 14a, 14b sind dann dazu ausgebildet, den Laserstrahl 5 derart auf die umlaufende Spiegelwandung 9 zu lenken, also zu reflektieren und entlang dieser umlaufenden Spiegelwandung 9 zu führen, so dass der Laserstrahl eine zweidimensionale Bahn um die Zentralachse 11 herum auf der umlaufenden Spiegelwandung 9 beschreitet. Dies kann dadurch realisiert werden, dass die erste Verstelleinrichtung 14a die erste Spiegelanordnung 13a derart verdreht und/oder verschwenkt, dass der Laserstrahl 5 überwiegend oder ausschließlich entlang der Y-Achse verstellt bzw. bewegt wird, wohingegen die zweite Verstelleinrichtung 14b dazu ausgebildet ist, die zweite Spiegelanordnung 13d derart zu verdrehen und/oder zu verschwenken, dass der Laserstrahl 5 überwiegend oder ausschließlich entlang der Z-Achse verstellt bzw. bewegt wird. In diesem Fall würde sich die erste Spiegelanordnung in der X-Y-Ebene bewegen und die zweite Spiegelanordnung in der X-Z-Ebene.

Die Achsen könnten dabei auch vertauscht sein. Grundsätzlich wäre es daher auch möglich, dass sich die erste Spiegelanordnung 13a in der X-Z-Ebene bewegt, wohingegen sich die zweite Spiegelanordnung 13b in der X-Y-Ebene bewegt.

Grundsätzlich können sich auch alle Spiegelanordnungen 13a, 13b in allen drei Ebenen bewegen. Die Verstelleinrichtungen 14a, 14b umfassen vorzugsweise einen Elektromotor oder einen Piezoaktor.

Die Verstelleinrichtungen 14a, 14b werden vorzugsweise von der Steuereinrichtung 7 gesteuert, die in Figur 6 dargestellt ist.

Die Laserstrahl-Umlenkvorrichtung 13 ist dazu ausgebildet, den Laserstrahl 5 derart zu führen, dass sich dieser vorzugsweise mehr als 2, 5, 8, 10, 15, 20, 25, 30, 35, 40, 50, 60, 70, 80, 90, 100 mal in der Sekunde entlang der umlaufenden Spiegelwandung 9 um 360° um die Zentralachse 11 bewegt.

Die Spiegelanordnungen 13a, 13b werden durch die jeweilige Verstelleinrichtung 14a, 14b vorzugsweise simultan zueinander verdreht und/oder verschwenkt.

Die Lasereintrittsöffnung 9b weist einen größeren Querschnitt auf als die Kabeleinführöffnung 9a. Der Querschnitt ist vorzugsweise in Draufsicht kreisförmig. Die umlaufende Spiegelwandung 9 verjüngt sich daher zumindest über eine Teillänge entlang der Zentralachse 11 von der Lasereintrittsöffnung 9b hin zur Kabeleinführöffnung 9a. Dies bedeutet, dass sie sich bezüglich ihres (offenen) Querschnitts, also bezüglich des Querschnitts der den Schneideraum 10 bildet, verjüngt. Diese Verjüngung ist vorzugsweise konus- bzw. trichterförmig.

In Figur 5A ist ein Längsschnitt durch ein Ausführungsbeispiel der Ringspiegeleinrichtung 8 dargestellt, in dem auch der Verlauf der umlaufenden Spiegelwandung 9 zu erkennen ist.

Die umlaufende Spiegelwandung 9 ist in mehrere vollständig umlaufende Segmente 9₁, 9₂, ... 9ₙ gegliedert, die entlang der Zentralachse 11 benachbart zueinander angeordnet sind. Zwei benachbart zueinander angeordnete umlaufende Segmente 9₁, 9₂, ... 9ₙ verlaufen winkelig zueinander. Der Winkel zwischen zwei solchen Segmenten 9₁, 9₂, ... 9ₙ beträgt 0° < ϕ < 180°. Dies gilt für direkt aneinander angrenzende umlaufende Segmente 9₁, 9₂, ... 9ₙ. Jedes Segment 9₁, 9₂, ... 9ₙ erstreckt sich dabei vorzugsweise über die gesamte Umlaufrichtung gleich weit entlang der Zentralachse 11.

Die umlaufenden Segmente 9₁, 9₂, ... 9ₙ sind vorzugsweise kegelstumpfförmig gestaltet. Im Längsschnitt umfasst zumindest eines oder alle dieser Segmente 9₁, 9₂, ... 9ₙ vorzugsweise die Form einer Geraden bzw. die einzelnen umlaufenden Segmente 9₁, 9₂, ... 9ₙ werden auf eine Gerade abgebildet. Grundsätzlich wäre auch eine kurvenförmige Form der einzelnen Segmente 9₁, 9₂, ... 9ₙ bis hin zu einer konkaven bzw. konvexen Form möglich.

Derartige, vorzugsweise kegelstumpfförmig gestaltete umlaufende Segmente 9₁, 9₂, ... 9ₙ führen dazu, dass ein Laserstrahl 5, der auf ein umlaufendes Segment 9₁, 9₂, ... 9ₙ trifft, auf einer anderen, entlang der Zentralachse 11 versetzt liegenden Stelle auf die geschirmte Leitung 1 reflektiert wird, verglichen mit einem Laserstrahl 5, der auf ein anderes umlaufendes Segment 9₁, 9₂, ... 9ₙ trifft. Ein solcher Laserstrahl 5 trifft dabei auch unter einem anderen Winkel auf die geschirmte Leitung 1.

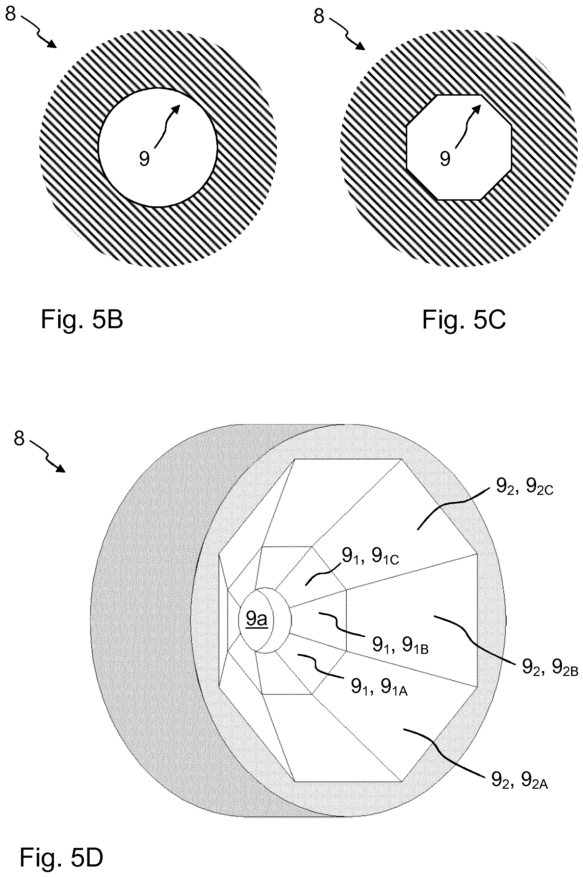

Die umlaufende Spiegelwandung 9 und insbesondere jedes der umlaufenden Segmente 9₁, 9₂, ... 9ₙ hat dabei einen Querschnitt, der in Draufsicht vorzugsweise die Form eines Kreises aufweist. Ein solcher Querschnitt ist in Figur 5B gezeigt. Grundsätzlich könnte der Querschnitt auch m-eckig sein, wie dies für m = 8 in Figur 5C gezeigt ist.

In Figur 5D ist dargestellt, dass die umlaufenden Segmente 9₁, 9₂, ..., 9ₙ in mehrere in Umlaufrichtung nebeneinander angeordnete m Facetten 9_{1A}, 9_{1B}, 9_{1C} bzw. 9_{2A}, 9_{2B}, 9_{2C} usw. gegliedert sind, sodass die umlaufenden Segmente 9₁, 9₂, ..., 9ₙ einen m-eckigen Querschnitt mit m = 8 aufweisen (siehe Figur 5C). Jede dieser Facetten 9_{1A}, 9_{1B}, 9_{1C} bzw. 9_{2A}, 9_{2B}, 9_{2C} eines Segments 9₁, 9₂, ..., 9ₙ hat vorzugsweise eine ebene Oberfläche, wobei zwei benachbarte Facetten 9_{1A}, 9_{1B}, 9_{1C} bzw. 9_{2A}, 9_{2B}, 9_{2C} eines Segments 9₁, 9₂, ..., 9ₙ und/oder von verschiedenen aber benachbarten Segmenten 9₁, 9₂, ..., 9ₙ unter einem Winkel aufeinander zu laufen bzw. aneinander anschließen. Jede Facette 9_{1A}, 9_{1B}, 9_{1C} bzw. 9_{2A}, 9_{2B}, 9_{2C} verjüngt sich vorzugsweise in Richtung der Kabeleinführöffnung 9a. Zwei Seiten jeder Facette 9_{1A}, 9_{1B}, 9_{1C} bzw. 9_{2A}, 9_{2B}, 9_{2C} verlaufen vorzugsweise parallel sind aber vorzugsweise unterschiedlich lang.

Die Ringspiegeleinrichtung 8 funktioniert daher derart, dass je weiter weg von der Lasereinführöffnung 9b der Laserstrahl 5 auf die umlaufende Spiegelwandung 9 trifft, er desto näher in Richtung der Kabeleinführöffnung 9a auf die geschirmte Leitung 1 reflektiert wird. Umgekehrt bedeutet dies, dass je näher der Laserstrahl 5 zur Lasereinführöffnung 9b auf die umlaufende Spiegelwandung 9 trifft, er umso näher zur Lasereintrittsöffnung 9b auf die geschirmte Leitung 1 reflektiert wird.

Der Laserstrahl 5 bewegt sich vorzugsweise auf einer Kreisbahn entlang der Y-Z-Ebene auf einem Segment 9₁, 9₂, ... 9ₙ der umlaufenden Spiegelwandung 9 um die Zentralachse 11 herum.

Je nachdem wie weit der Laserstrahl 5 beabstandet von der Lasereintrittsöffnung 9b auf die umlaufende Spiegelwandung 9 trifft, ändert sich der Kreisbahndurchmesser der Kreisbahn, die der Laserstrahl 5 durchläuft. Im Hinblick auf die Figuren 4A und 4B wird deutlich, dass sich dadurch auch der Auftreffpunkt des Laserstrahls 5 auf der geschirmten Leitung 1 ändert.

In Figur 4A werden die Schirmdrähte 1b geschnitten, wobei der Laserstrahl 5 näher in Richtung der Kabeleinführöffnung 9a als in Richtung der Lasereintrittsöffnung 9b auf die umlaufende Spiegelwandung 9 trifft. In Figur 4B wird die Schirmfolie 1c geschnitten, wobei der Laserstrahl näher in Richtung der Lasereintrittsöffnung 9b auf die umlaufende Spiegelwandung 9 trifft als in Richtung der Kabeleintrittsöffnung 9a.

In diesem Zusammenhang verändert sich auch der Strahlweg des Laserstrahls 5. Dadurch muss die Lage des Fokuspunktes durch Verschieben der Linsen 6a, 6b der Teleskopeinrichtung 6 zueinander korrigiert werden. Im Weiteren ändert sich hierbei auch der Einfallswinkel, also der Auftreffwinkel auf der Oberfläche der geschirmten Leitung 1. Dies wird durch einen geänderten Winkel an einer vorzugsweise konischen Spiegelfläche der umlaufenden Spiegelwandung 9 korrigiert. Dies bedeutet, dass die einzelnen Segmente 9₁, 9₂, ... 9ₙ einen Winkel untereinander und insbesondere einen Winkel zur Zentralachse 11, also zur geschirmten Leitung 1 aufweisen, um verschiedene Auftreffwinkel durch den verlängerten Strahlweg zu korrigieren.

Die Ringspiegeleinrichtung 8 besteht vorzugsweise aus Kupfer, wobei die umlaufende Spiegelwandung 9 noch zusätzlich beschichtet ist. Sie kann auch aus einem optischen, beschichteten Glas bestehen.

Durch die Laserstrahl-Umlenkvorrichtung 13 und die Fokusnachstellung mittels der Teleskopeinrichtung 6 kann die Bearbeitung, also das Ausführen von Umfangsschnitten an geschirmten Leitungen 1 an mehreren Stellen entlang der Zentralachse 11, also entlang einer zylindrischen Mantelfläche der geschirmten Leitung 1 erfolgen.

Vorteilhaft dabei ist unter anderem eine Reduzierung des Wartungsaufwands, ein verschleißfreier Prozess, eine gleichbleibende Qualität (ein Laser wird nicht stumpf) sowie der berührungslose Prozess, weil die geschirmte Leitung 1 keiner mechanischen Belastung ausgesetzt wird. Weiterhin ist es durch die Auswahl einer geeigneten Wellenlänge möglich mit einem Laserstrahl 5 nur bestimmte Materialien, also schichten zu bearbeiten, ohne die darunter liegenden Materialien, also Schichten zu beschädigen. Durch die große Schärfentiefe des fokussierten Laserstrahls 5 können auch unrunde Leitungen 1 sowie Leitungen mit nicht zentrischem Aufbau (Wandstärkeunterschieden) mit gleichbleibender Qualität bearbeitet werden. Die Anordnung und die Form könnte beispielsweise noch durch ein 3D-Erfassungssystem mittels Kameras ermittelt werden, um den Lasterstrahl 5 optimal zu führen.

Insbesondere ist es vorteilhaft, dass eine Verletzung von Isolationsschichten (z.B. Dielektrikum 1d) unter der zu schneidenden Schicht (z.B. Schirmfolie 1c) vermieden wird. Prozessstörungen, beispielsweise durch ein Verfangen von Schirmdrähten 1b in rotierenden Messern, werden ebenfalls vermieden. Die Schirmfolie 1c kann außerdem sehr nahe an den umgestülpten Schirmdrähten 1b beschnitten werden. Beim Schneiden der Schirmfolie 1c können auch vereinzelt vorstehende Schirmdrähte 1b mit abgeschnitten werden. Wichtig ist außerdem, dass sowohl das Beschneiden der Schirmfolie 1c als auch das Beschneiden der Schirmdrähte 1b in einem Arbeitsschritt ausgeführt werden kann. Eine Automation beider Prozesse ist daher möglich. Die erfindungsgemäße Laserschneidevorrichtung 3 ist außerdem sehr flexibel bei unterschiedlichen Leitungsdurchmessern.

Die Laserschneidevorrichtung 3 weist außerdem vorzugsweise noch ein Befestigungsgehäuse 15 auf. Die Ringspiegeleinrichtung 8 ist vorzugsweise vollständig in dem Befestigungsgehäuse 15 angeordnet. Über Justierschrauben 19, insbesondere über vier gleichmäßig voneinander beabstandete Justierschrauben 19 kann die Ringspiegeleinrichtung 8 in dem Befestigungsgehäuse 15 derart ausgerichtet werden, dass ihr Zentrum, also die durch ihr Zentrum verlaufende Zentralachse 11 durch die Mitte der geschirmten Leitung 1 und durch die zweite Spiegelanordnung 13b verläuft.

Das Befestigungsgehäuse 15 weist eine erste Gehäuseöffnung 15a auf, über die die Kabeleinführöffnung 9a zugänglich ist. Das Befestigungsgehäuse 15 weist außerdem eine zweite Gehäuseöffnung 15b auf, über die die Lasereintrittsöffnung 9b zugänglich ist.

Die zweite Gehäuseöffnung 15b ist vorzugsweise mit einem optischen Fenster 16 verschlossen. Dieses optische Fenster 16 besteht oder umfasst vorzugsweise Quarzglas. Das optische Fenster 16 ist für die Wellenlänge des Laserstrahls 5 transparent. Das optische Fenster 16 umfasst vorzugsweise in seiner Mitte eine Öffnung 17, in die ein Ende der geschirmten Leitung 1 zur Zentrierung einbringbar oder eingebracht ist. In den Figuren 4A, 4B und 6 ist allerdings ein anderer Sachverhalt dargestellt. Hier umfasst das optische Fenster 16 eine Zentrier- und/oder Halteeinrichtung 18, in die die geschirmte Leitung 1 zur Befestigung einführbar oder eingeführt ist. Diese Zentrier- und/oder Halteeinrichtung 18 kann an der Öffnung 17 des optischen Fensters 16 befestigt sein. Sie kann allerdings auch mit dem optische Fenster 16 verklebt sein. Die Zentrier- und/oder Halteeinrichtung 18 umfasst eine konisch verbreiterte Aufnahmeöffnung für die geschirmte Leitung, die sich in Richtung des optischen Fensters 16 verjüngt.

In dem Befestigungsgehäuse 15 ist im Bereich der zweiten Gehäuseöffnung 15b zumindest eine Düseneinrichtung 20 angeordnet, die dazu ausgebildet ist, Luft oder ein Prozessgas wie Sauerstoff und/oder Stickstoff auf die umlaufende Spiegelwandung 9 zu blasen. Unter dem Wortlaut "im Bereich" ist zu verstehen, dass die Düseneinrichtung 20 näher an der zweiten Gehäuseöffnung 15b angeordnet ist als an der ersten Gehäuseöffnung 15a.

Bei dieser Düseneinrichtung 20 handelt es sich vorzugsweise um eine Ringdüse, die sich um 360° um die Zentralachse 11 herum erstreckt. Dadurch kann die umlaufende Spiegelwandung 9 gleichmäßig mit Luft oder dem Prozessgas beblasen werden. Dies dient einerseits dazu, die Ringspiegeleinrichtung 8 zu kühlen und unterstützt andererseits den Laserprozess. Aufgrund der Tatsache, dass der Laserstrahl 5 im Bereich der umlaufenden Spiegelwandung 9 noch nicht so stark fokussiert ist wie am Auftreffpunkt auf der geschirmten Leitung 1, können Beschädigungen an der umlaufenden Spiegelwandung 9 wie auch am optischen Fenster 16 vermieden werden.

Im Bereich der ersten Gehäuseöffnung 15a ist zumindest eine Absaugvorrichtung 21 (s. Figur 6) angeordnet, die dazu ausgebildet ist, die durch den Laserschneideprozess entstehenden Emissionen und/oder abgeschnittenen Teile der geschirmten Leitung 1 einzusaugen. Diese Emissionen (z.B. Rauch) und/oder abgeschnittenen Teile werden durch die Düseneinrichtung 20 auch in Richtung der Absaugvorrichtung 21 geblasen.

Bei der Absaugvorrichtung 21 handelt es sich vorzugsweise um k Saugstützen, die um α = 360°/k versetzt zueinander angeordnet sind. Vorzugsweise weist k den Wert 2, 3, 4, 5, 6, 7, 8, 9, 10 auf. Grundsätzlich wäre es auch möglich, dass die Absaugvorrichtung 21 als ringförmige Saugstütze ausgebildet ist und ringförmig, also um 360° um die Zentralachse 11 umlaufend herum angeordnet ist. Das Befestigungsgehäuse 15 ist insbesondere bezüglich seiner zweiten Gehäuseöffnung 15b abgedichtet.

Die Laserschneidevorrichtung 3 umfasst außerdem vorzugsweise noch eine Transporteinrichtung 22. Die Transporteinrichtung 22 ist vorzugsweise in Form eines Transportschlittens ausgebildet, und dient dazu, die geschirmte Leitung 1 zu halten und entlang oder mit einer Komponente überwiegend entlang der Zentralachse 11 durch die Kabeleinführöffnung 9a in den Schneidraum 10 zu fahren. Die Transporteinrichtung 22 kann auch einen Roboterarm mit einer entsprechenden Kabelaufnahme umfassen. Die Transporteinrichtung 22 und die Ringspiegeleinrichtung 8 sind während des Laserschneidens relativ unverschieblich zueinander und/oder ortsfest angeordnet. Die Transporteinrichtung 22 in Form eines Transportschlittens umfasst insbesondere einen Längsschlitten und ein Kreuzschlittensystem. Der Längsschlitten erlaubt eine Bewegung entlang der X-Achse und das Kreuzschlittensystem entlang der Y- und der Z-Achse, wodurch die geschirmte Leitung 1 genau im Zentrum der Ringspiegeleinrichtung 8 ausgerichtet werden kann.

Die Laserschneidevorrichtung 3 umfasst außerdem noch ein Schutzgehäuse 25. Innerhalb des Schutzgehäuses 25 sind die zumindest eine Lasereinrichtung 4, die Teleskopeinrichtung 6 und die Laserstrahl-Umlenkvorrichtung 13 angeordnet. Das Schutzgehäuse 25 umfasst eine Öffnung 25a, die durch das Befestigungsgehäuse 15 verschlossen ist. Zwischen dem Schutzgehäuse 25 und dem Befestigungsgehäuse 15 ist vorzugsweise noch eine Dichteinrichtung eingebracht, die verhindert, dass irgendwelche Gase und Partikel durch die Öffnung 25a austreten. Diese Gase und Partikel können lediglich über die erste Gehäuseöffnung 15a des Befestigungsgehäuses 15 austreten, wobei an dieser ersten Gehäuseöffnung 15a die Absaugvorrichtung 21 angeordnet ist.

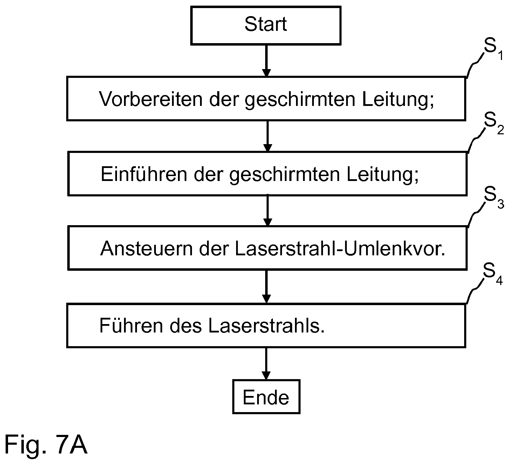

Ein erfindungsgemäßes Verfahren zum Laserschneiden von geschirmten Leitungen 1 verwendet die hier dargestellte Laserschneidevorrichtung 3. Dieses Verfahren wird im Hinblick auf die Figuren 7A bis 7C näher beschrieben. In einem ersten Verfahrensschritt S₁ wird die geschirmte Leitung 1 vorbereitet. Einige der Verfahrensschritte, die ausgeführt werden können, um die geschirmte Leitung 1 vorzubereiten, sind in den Figuren 2A und 2B beschrieben. Es handelt sich dabei insbesondere um diejenigen Schritte, die ausgeführt werden, bis die Schirmdrähte 1b über das Stützcrimp 2 bzw. die Stützhülse 2 übergestülpt sind und die Schirmfolie 1c zum Vorschein kommt.

Danach wird der Verfahrensschritt S₂ ausgeführt. In dem Verfahrensschritt S₂ wird die geschirmte Leitung 1 in den Schneideraum 10 eingeführt. Sie wird dabei derart angeordnet bzw. ausgerichtet, dass ihre Längsachse parallel bzw. identisch zur Zentralachse 11 verläuft.

Im Anschluss daran wird der Verfahrensschritt S₃ ausgeführt. In diesem Verfahrensschritt S₃ wird die Laserstrahl-Umlenkvorrichtung 13 derart angesteuert, dass der Laserstrahl 5 durch die Lasereintrittsöffnung 9b in den Schneideraum 10 eintritt und auf die umlaufende Spiegelwandung 9 trifft.

Danach wird der Verfahrensschritt S₄ ausgeführt. In diesem Verfahrensschritt S4 wird der Laserstrahl 5 durch die Laserstrahl-Umlenkvorrichtung 13 derart geführt, dass sich dieser entlang der umlaufenden Spiegelwandung 9 in einer Bewegungsbahn um 360° um die Zentralachse 11 mehrfach herumbewegt und auf die geschirmte Leitung 1 reflektiert wird und die geschirmte Leitung 1 entlang ihres Umfangs schneidet. Unter dem Wortlaut "mehrfach" ist auch zu verstehen, dass der Laserstrahl 5 mit einer hohen Geschwindigkeit um die Zentralachse 11 herum rotiert und auf die umlaufende Spiegelwandung 9 trifft. Dies kann mehr als 2, 3, 5, 10, 15, 20, 25, 30, 35, 40, 50, 60, 70, 80, 90, 100 mal in der Sekunde geschehen. Dabei kann der Kreisbahndurchmesser durch die Laserstrahl-Umlenkvorrichtung 13 eingestellt werden. Dadurch ändert sich auch der Auftreffpunkt des Laserstrahls 5 auf der geschirmten Leitung 1, so dass einerseits die Schirmdrähte 1d und andererseits die Schirmfolie 1c geschnitten werden können. Wenn die Schirmfolie 1c geschnitten werden soll, dann verdampft die Kunststofffolie bzw. die Kunststoffbeschichtung der Schirmfolie 1c sobald der Laserstrahl 5 auftrifft. Die verbleibende Metall- insbesondere Aluminiumschicht der Schirmfolie 1c weist dann nur noch eine sehr geringe Festigkeit auf und kann anschließend mit einem Greifer-System abgezogen werden.

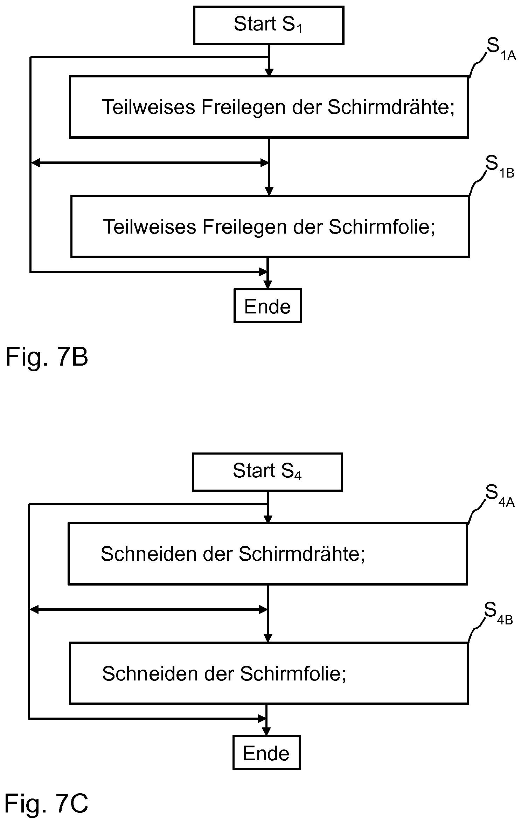

Der Verfahrensschritt "Vorbereiten S₁" umfasst, wie bereits erläutert, die in den Figuren 2A und 2B dargestellten Schritte, von denen allerdings nicht alle ausgeführt werden müssen. Es wird hier auch auf Figur 7B verwiesen. Insbesondere umfasst der Verfahrensschritt "Vorbereiten S₁" allerdings den Verfahrensschritt S_{1A}, bei dem die Schirmdrähte 1b zumindest teilweise freigelegt werden. Im Anschluss daran wird das Stützcrimp 2 oder die Stützhülse 2 auf diese frei gelegten Schirmdrähte 1c aufgepresst. Im Anschluss daran werden die freigelegten Schirmdrähte über das Stützcrimp 2 oder die Stützhülse 2 umgestülpt. Nach diesem Verfahrensschritt können dann die Schirmdrähte, die sich oberhalb des Stützcrimps 2 oder der Stützhülse 2 befinden, durch die Laserschneidevorrichtung 3 abgeschnitten werden. Ergänzend oder alternativ dazu kann auch der Verfahrensschritt S_{1B} ausgeführt werden, in dem die Schirmfolie 1c zumindest teilweise freigelegt wird. Dieses teilweise Freilegen kann auch unmittelbar dadurch erfolgen, dass die Schirmdrähte 1b über das Stützcrimp 2 bzw. die Stützhülse 2 übergestülpt werden.

Der Verfahrensschritt "Führen S₄" kann außerdem noch die nachfolgenden Verfahrensschritte umfassen. Es wird hier auch auf Figur 7C verwiesen. In einem weiteren Verfahrensschritt S_{4A} werden die Schirmdrähte 1b, die sich über dem Stützcrimp 2 oder der Stützhülse 2 befinden, auf eine vorbestimmte Länge hin geschnitten. Dies erfolgt im Rahmen eines Umfangschnittes an der geschirmten Leitung 1. Ergänzend oder alternativ kann in dem Verfahrensschritt S_{4B} die Schirmfolie 1b an einer vorbestimmten Stelle der geschirmten Leitung 1 an ihrem gesamten Umfang, also entlang ihres gesamten Umfangs eingeschnitten werden.

Grundsätzlich ist auch eine entsprechende geschnittene Leitung 1 geschützt, wie sie durch die hier dargestellten Verfahrensschritts herstellbar ist.

Bevorzugt ist die Laserstrahl-Umlenkvorrichtung 13 dazu ausgebildet, den Laserstrahl 5 derart zu führen, dass sich dieser mehr als 2, 5, 8, 10, 15, 20, 25, 30, 35, 40, 50, 60, 70, 80, 90, 100 Mal in der Sekunde entlang einer Bahn auf der umlaufenden Spiegelwandung 9 um 360° um die Zentralachse 11 herum bewegt

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

## Patentansprüche

1. Laserschneidevorrichtung (3) für geschirmte Leitungen (1), insbesondere zum Laserschneiden von Schirmdrähten (1b) und/oder Schirmfolien (1c) an geschirmten Leitungen (1) mit den folgenden Merkmalen:
- es ist zumindest eine Lasereinrichtung (4) vorgesehen, die dazu ausgebildet ist, einen Laserstrahl (5) zu erzeugen;
- es ist eine Ringspiegeleinrichtung (8) vorgesehen, die eine umlaufende Spiegelwandung (9) aufweist, die einen Schneideraum (10) umgrenzt und von einer Zentralachse (11) durchsetzt ist;
- die umlaufende Spiegelwandung (9) ist an ihren Stirnseiten (9a, 9b) geöffnet, wodurch an der ersten Stirnseite (9a) eine Kabeleinführöffnung (9a) und an der zweiten Stirnseite (9b), die der ersten Stirnseite (9a) gegenüber liegt, eine Lasereintrittsöffnung (9b) gebildet ist, wobei der Schneideraum (10) von außerhalb der umlaufenden Spiegelwandung (9) aus über diese Öffnungen (9a, 9b) zugänglich ist;
- eine mit dem Laserstrahl (5)zu schneidende geschirmte Leitung (1) ist entlang der Zentralachse (11) in dem Schneideraum (10) anordenbar;
- die umlaufende Spiegelwandung (9) ist dazu ausgebildet, den Laserstrahl (5) in Richtung der geschirmten Leitung (1) zu reflektieren, wobei sich die umlaufende Spiegelwandung (9) um 360° um die Zentralachse (11) herum erstreckt;
- es ist zudem eine Laserstrahl-Umlenkvorrichtung (13) vorgesehen, die dazu ausgebildet ist, den Laserstrahl (5) derart zu führen, so dass der Laserstrahl (5) durch die Lasereintrittsöffnung (9b) in den Schneideraum (10) eintritt und auf die umlaufende Spiegelwandung (9) trifft;
- die Laserstrahl-Umlenkvorrichtung (13) ist weiter dazu ausgebildet, den Laserstrahl (5) derart zu führen, dass sich dieser auf einer Bahn entlang der umlaufenden Spiegelwandung (9) um 360° um die Zentralachse (11) herum bewegt, wodurch die geschirmte Leitung (1), die im Bereich der Zentralachse (11) innerhalb des Scheideraums (10) anordenbar ist, durch den an der umlaufenden Spiegelwandung (9) reflektierten Laserstrahl (5) entlang ihres gesamten Umfangs schneidbar ist;
**gekennzeichnet durch** das folgenden Merkmal:
- die umlaufende Spiegelwandung (9) ist segmentiert, wodurch die Bahn, um die der Laserstrahl (5) entlang der umlaufenden Spiegelwandung (9) um 360° um die Zentralachse (11) herum bewegbar ist, unterbrochen ist.

2. Laserschneidevorrichtung (3) nach Anspruch 1, **gekennzeichnet durch,** die folgenden Merkmale:
- die Laserstrahl-Umlenkvorrichtung (13) umfasst zumindest eine erste Spiegelanordnung (13a) und eine zweite Spiegelanordnung (13b), sowie zumindest eine erste Verstelleinrichtung (14a) und eine zweite Verstelleinrichtung (14b);
- die Spiegelanordnungen (13a, 13b) sind im Strahlengang des Laserstrahls (5) angeordnet und dazu ausgebildet, den Laserstrahl (5) von der ersten Spiegelanordnung (13a) zur zweiten Spiegelanordnung (13b) zu reflektieren und von der zweiten Spiegelanordnung (13b) oder letzten Spiegelanordnung (13b) zur umlaufenden Spiegelwandung (9);
- die erste Verstelleinrichtung (14a) ist dazu ausgebildet, die erste Spiegelanordnung (13a) derart zu verdrehen und/oder zu verschwenken, dass der Laserstrahl (5) überwiegend oder ausschließlich entlang
a) der Y-Achse; oder
b) der Z-Achse
verstellt bzw. bewegt wird,
- die zweite Verstelleinrichtung (14b) ist dazu ausgebildet, die zweite Spiegelanordnung (13b) derart zu verdrehen und/oder zu verschwenken, dass der Laserstrahl (5) überwiegend oder ausschließlich entlang
a) der Z-Achse; oder
b) der Y-Achse
verstellt bzw. bewegt wird,
- die Y-Achse und die Z-Achse stehen in einem Winkel von 90° zueinander und in einem Winkel von 90° zur X-Achse, wobei die X-Achse entlang der Zentralachse (11) verläuft.

3. Laserschneidevorrichtung (3) nach Anspruch 2, **gekennzeichnet durch,** das folgende Merkmal:
- die Zentralachse (11) der umlaufenden Spiegelwandung (9) verläuft durch die zweite Spiegelanordnung (13b) oder letzte Spiegelanordnung (13b).

4. Laserschneidevorrichtung (3) nach Anspruch 2 oder 3, **gekennzeichnet durch,** das folgende Merkmal:
- die erste Spiegelanordnung (13a) und die zweite Spiegelanordnung (13b) sind lediglich in
a) Y-Richtung; oder
b) Z-Richtung; oder
c) Z-Richtung und Y-Richtung;
versetzt zueinander angeordnet.

5. Laserschneidevorrichtung (3) nach einem der Ansprüche 2 bis 4, **gekennzeichnet durch,** das folgende Merkmal:
- die Spiegelanordnungen (13a, 13b) sind durch die jeweilige Verstelleinrichtung (14a, 14b) simultan zueinander verdrehbar und/oder verschwenkbar.

6. Laserschneidevorrichtung (3) nach einem der vorherigen Ansprüche, **gekennzeichnet durch,** die folgenden Merkmale:
- es ist eine Teleskopeinrichtung (6) vorgesehen;
- die Teleskopeinrichtung (6) ist zwischen der Lasereinrichtung (4) und der Laserstrahl-Umlenkvorrichtung (13) angeordnet und dazu ausgebildet, die Fokussierung des Laserstrahls (5) zu ändern, wodurch geschirmte Leitungen (1) mit unterschiedlichen Durchmessern geschnitten werden können und/oder wodurch eine Schneidposition entlang der Zentralachse (11) verschoben werden kann.

7. Laserschneidevorrichtung (3) nach einem der vorherigen Ansprüche, **gekennzeichnet durch,** die folgenden Merkmale:
- die Lasereintrittsöffnung (9b) weist einen größeren Querschnitt auf als die Kabeleinführöffnung (9a);
- die umlaufende Spiegelwandung (9) verjüngt sich vorzugsweise konus- bzw. trichterförmig zumindest über eine Teillänge entlang der Zentralachse (11) von der Lasereintrittsöffnung (9b) hin zur Kabeleinführöffnung (9a) .

8. Laserschneidevorrichtung nach Anspruch 7, **gekennzeichnet durch,** die folgenden Merkmale:
- die umlaufende Spiegelwandung (9) weist einen konkaven oder konvexen Verlauf auf; und/oder
- die umlaufende Spiegelwandung (9) ist in mehrere vollständig umlaufende Segmente (9₁, 9₂, ..., 9ₙ) gegliedert, die entlang der Zentralachse (11) benachbart zueinander angeordnet sind, wobei zwei benachbarte umlaufende Segmente (9₁, 9₂, ..., 9ₙ) winklig aufeinander zu laufen, wodurch
a) ein Laserstrahl (5), der auf ein umlaufendes Segment (9₁, 9₂, ..., 9ₙ) trifft, wird an einer anderen, entlang der Zentralachse (11) versetzt liegenden Stelle auf die geschirmte Leitung (1) reflektiert, verglichen mit einem Laserstrahl (5), der auf ein anderes umlaufendes Segment (9₁, 9₂, ..., 9ₙ) trifft;
und/oder
b) ein Laserstrahl (5), der auf ein umlaufendes Segment (9₁, 9₂, ..., 9ₙ) trifft, wird unter einem anderen Winkel auf die geschirmte Leitung (1) reflektiert, verglichen mit einem Laserstrahl (5), der auf ein anderes umlaufendes Segment (9₁, 9₂, ..., 9ₙ) trifft.

9. Laserschneidevorrichtung (3) nach Anspruch 8, **gekennzeichnet durch,** die folgenden Merkmale:
- zumindest ein oder alle der umlaufenden Segmente (9₁, 9₂, ..., 9ₙ) sind kegelstumpfförmig gestaltet; und/oder
- zumindest ein oder alle der umlaufenden Segmente (9₁, 9₂, ..., 9ₙ) sind in mehrere in Umlaufrichtung nebeneinander angeordnete m Facetten (9_{1A}, 9_{1B}, 9_{1C} bzw. 9_{2A}, 9_{2B}, 9_{2C}) gegliedert, sodass zumindest eine oder alle der umlaufenden Segmente (9₁, 9₂, ..., 9ₙ) einen m-eckigen Querschnitt aufweisen, mit m ≥ 3 oder m ≥ 4 oder m ≥ 5 oder m ≥ 6 oder m ≥ 7 oder m ≥ 8 oder m ≥ 9 oder m ≥ 10.

10. Laserschneidevorrichtung (3) nach einem der vorherigen Ansprüche, **gekennzeichnet durch,** die folgenden Merkmale:
- es ist eine Transporteinrichtung (22) vorgesehen;
- der Transporteinrichtung (22) ist dazu ausgebildet, die geschirmte Leitung (1) zu halten und durch die Kabeleinführöffnung (9a) in den Schneideraum (10) zu fahren;
- der Transporteinrichtung (22) und die Ringspiegeleinrichtung (8) sind während des Laserschneidens
a) relativ unverschiebbar zueinander; und/oder
b) ortsfest
angeordnet.

11. Laserschneidevorrichtung (3) nach einem der vorherigen Ansprüche, **gekennzeichnet durch,** die folgenden Merkmale:
- es ist ein Befestigungsgehäuse (15) vorgesehen;
- die Ringspiegeleinrichtung (8) ist in dem Befestigungsgehäuse (15) angeordnet;
- das Befestigungsgehäuse (15) weist eine erste Gehäuseöffnung (15a) auf, über die die Kabeleinführöffnung (9a) zugänglich ist;
- das Befestigungsgehäuse (15) weist eine zweite Gehäuseöffnung (15b) auf, über die die Lasereintrittsöffnung (9b) zugänglich ist;
a) die zweite Gehäuseöffnung (15b) ist mit einem optischen Fenster (16), das insbesondere ein Quarzglas umfasst, verschlossen, wobei das optische Fenster (16) für die Wellenlänge des Laserstrahls (5) transparent ist und
aa) wobei das optische Fenster (16) in der Mitte eine Öffnung (17) aufweist, in die ein Ende der geschirmten Leitung (1) zur Zentrierung einbringbar ist; oder
bb) wobei an dem optischen Fenster (16) eine Zentrier- und/oder Halteeinrichtung (18) befestigt ist, in die die geschirmte Leitung (1) zur Befestigung einführbar ist;
und/oder
b) im Bereich der zweiten Gehäuseöffnung (15b) ist zumindest eine Düseneinrichtung (20) angeordnet, die dazu ausgebildet ist, Luft oder ein Prozessgas auf die umlaufende Spiegelwandung (9) zu blasen;
und/oder
c) im Bereich der ersten Gehäuseöffnung (15a) ist zumindest eine Absaugvorrichtung (21) angeordnet, die dazu ausgebildet ist, die durch den Laserschneideprozess entstehenden Emissionen und/oder abgeschnittene Teile der geschirmten Leitung (1) einzusaugen.

12. Laserschneidevorrichtung (3) nach Anspruch 11, **gekennzeichnet durch,** die folgenden Merkmale:
- bei der Düseneinrichtung (20) handelt es sich um eine Ringdüse und bei dem Prozessgas um Sauerstoff und/oder Stickstoff; und/oder
- bei der Absaugvorrichtung (21) handelt es sich um
a) k Saugstützen, die um α = 360°/k versetzt zueinander angeordnet sind, mit k = 2, 3, 4, 5, 6, 7, 8, 9, 10; oder
b) eine ringförmige Saugstütze.

13. Laserschneidevorrichtung (3) nach einem der vorherigen Ansprüche, **gekennzeichnet durch,** die folgenden Merkmale:
- die Ringspiegeleinrichtung (8) besteht oder umfasst Kupfer oder Glas, wobei die umlaufende Spiegelwandung (9) beschichtet ist, um den Laserstrahl (5) überwiegend oder vollständig reflektieren zu können;
- die umlaufende Spiegelwandung (9) hat einen Querschnitt, der in Draufsicht die Form eines:
a) Rechtecks;
b) m-Ecks, mit m ≥ 3 oder m ≥ 4 oder m ≥ 5 oder m ≥ 6 oder m ≥ 7 oder m ≥ 8 oder m ≥ 9 oder m ≥ 10;
c) Quadrats;
d) Ovals;
e) Kreises; oder
f) n-Polygons hat, oder einer solchen Form angenähert ist.

14. Laserschneidevorrichtung (3) nach einem der vorherigen Ansprüche, **gekennzeichnet durch,** das folgende Merkmal:
- zumindest ein umlaufendes Segment (9₁, 9₂, ..., 9ₙ) ist in mehrere in Umlaufrichtung nebeneinander angeordnete m Facetten (9_{1A}, 9_{1B}, 9_{1C} bzw. 9_{2A}, 9_{2B}, 9_{2C}) gegliedert, sodass zumindest das eine umlaufende Segment (9₁, 9₂, ..., 9ₙ) einen m-eckigen Querschnitt aufweist, mit m ≥ 3 oder m ≥ 4 oder m ≥ 5 oder m ≥ 6 oder m ≥ 7 oder m ≥ 8 oder m ≥ 9 oder m ≥ 10, wobei jede Facette (9_{1A} 9_{1B}, 9_{1C} bzw. 9_{2A}, 9_{2B}, 9_{2C}) eine ebene Oberfläche aufweist.

15. Laserschneidevorrichtung (3) nach einem der vorherigen Ansprüche, **gekennzeichnet durch,** das folgende Merkmal:
- es ist ein 3D-Erfassungsystem mittels Kameras vorgesehen, das dazu ausgebildet ist, eine Anordnung und eine Form von unrunden Leitungen (1) oder Leitungen (1) mit nicht zentrischem Aufbau zu ermitteln, wodurch der Laserstrahl (5) optimal führbar ist.

16. Verfahren zum Laserschneiden von geschirmten Leitungen (1) mit einer Laserschneidevorrichtung (3) gemäß einem der vorherigen Ansprüche, **gekennzeichnet durch,** die folgenden Verfahrensschritte:
- Vorbereiten (S₁) der geschirmten Leitung (1);
- Einführen (S₂) der geschirmten Leitung (1) in den Schneideraum (10);
- Ansteuern (S₃) der Laserstrahl-Umlenkvorrichtung (13) derart, dass der Laserstrahl (5) durch die Lasereintrittsöffnung (9b) in den Schneideraum (10) eintritt und auf die umlaufende Spiegelwandung (9) trifft; und
- Führen des Laserstrahls (S₄), so dass sich dieser auf einer Bahn entlang der umlaufenden Spiegelwandung (9) um 360° um die Zentralachse (11) herum bewegt und auf die geschirmte Leitung (1) reflektiert wird und die geschirmte Leitung (1) entlang ihres Umfangs schneidet.

17. Verfahren zum Laserschneiden nach Anspruch 16, **gekennzeichnet durch,** die folgenden Verfahrensschritte:
- der Verfahrensschritt Vorbereiten (S₁) umfasst die folgenden Verfahrensschritte:
a) zumindest teilweises Freilegen (S_{1A}) von Schirmdrähten (1b) und Aufpressen eines Stützcrimps (2) oder einer Stützhülse (2) auf die zumindest teilweise freigelegten Schirmdrähte (1b) und Umstülpen der unter dem Stützcrimp (2) oder der Stützhülse (2) vorstehenden Schirmdrähten (1b) über den Stützcrimp (2) oder die Stützhülse (2); und/oder
b) zumindest teilweises Freilegen (S_{1B}) einer Schirmfolie (1c);
- der Verfahrensschritt Führen (S₄) umfasst die folgenden Verfahrensschritte:
a) Schneiden (S_{4A}) der Schirmdrähte (1b), die über dem Stützcrimp (2) oder der Stützhülse (2) angeordnet sind auf eine vorbestimmte Länge; und/oder
Schneiden (S_{4B}) der Schirmfolie (1c) an einer vorbestimmten Stelle.

## Claims

1. Laser cutting apparatus (3) for shielded leads (1), in particular for laser-cutting of shielding wires (1b) and/or shielding foils (1c) at shielded leads (1), comprising the following features:
- provision is made of at least one laser device (4) that is embodied to produce a laser beam (5);
- provision is made of a ring mirror device (8) having a circumferential mirrored wall (9), which delimits a cutting chamber (10) and through which a central axis (11) passes;
- the circumferential mirrored wall (9) is open at its end sides (9a, 9b), as a result of which a cable introduction opening (9a) is formed at the first end side (9a) and a laser inlet opening (9b) is formed at the second end side (9b), which lies opposite the first end side (9a), wherein the cutting chamber (10) is accessible from outside of the circumferential mirrored wall (9) by way of these openings (9a, 9b);
- a shielded lead (1) to be cut by the laser beam (5) is arrangeable along the central axis (11) in the cutting chamber (10);
- the circumferential mirrored wall (9) is embodied to reflect the laser beam (5) in the direction of the shielded lead (1), wherein the circumferential mirrored wall (9) extends through 360° around the central axis (11);
- provision is moreover made of a laser beam deflection apparatus (13) that is embodied to guide the laser beam (5) in such a way that the laser beam (5) enters the cutting chamber (10) through the laser inlet opening (9b) and strikes the circumferential mirrored wall (9);
- the laser beam deflection apparatus (13) is further embodied to guide the laser beam (5) in such a way that the latter moves on a trajectory along the circumferential mirrored wall (9) through 360° about the central axis (11), as a result of which the shielded lead (1), which is arrangeable in the region of the central axis (11) within the cutting chamber (10), is cuttable along the entire circumference thereof by the laser beam (5) that is reflected at the circumferential mirrored wall (9);
**characterized by** the following feature:
- the circumferential mirrored wall (9) is segmented, as a result of which the trajectory along which the laser beam (5) is movable along the circumferential mirrored wall (9) through 360° around the central axis (11) is interrupted.

2. Laser cutting apparatus (3) according to Claim 1, **characterized by** the following features:
- the laser beam deflection apparatus (13) comprises at least a first mirror arrangement (13a) and a second mirror arrangement (13b), and also at least a first adjustment device (14a) and a second adjustment device (14b);
- the mirror arrangements (13a, 13b) are arranged in the beam path of the laser beam (5) and embodied to reflect the laser beam (5) from the first mirror arrangement (13a) to the second mirror arrangement (13b) and reflect said laser beam from the second mirror arrangement (13b) or last mirror arrangement (13b) to the circumferential mirrored wall (9);
- the first adjustment device (14a) is embodied to twist and/or pivot the first mirror arrangement (13a) in such a way that the laser beam (5) is predominantly or exclusively adjusted or moved along
a) the Y-axis; or
b) the Z-axis,
- the second adjustment device (14b) is embodied to twist and/or pivot the second mirror arrangement (13b) in such a way that the laser beam (5) is predominantly or exclusively adjusted or moved along
a) the Z-axis; or
b) the Y-axis,
- the Y-axis and the Z-axis are at an angle of 90° with respect to one another and at an angle of 90° with respect to the X-axis, wherein the X-axis extends along the central axis (11).

3. Laser cutting apparatus (3) according to Claim 2, **characterized by** the following feature:
- the central axis (11) of the circumferential mirrored wall (9) extends through the second mirror arrangement (13b) or last mirror arrangement (13b).

4. Laser cutting apparatus (3) according to Claim 2 or 3, **characterized by** the following feature:
- the first mirror arrangement (13a) and the second mirror arrangement (13b) are arranged offset from one another only in the
a) Y-direction; or
b) Z-direction; or
c) Z-direction and Y-direction.

5. Laser cutting apparatus (3) according to any one of Claims 2 to 4, **characterized by** the following feature:
- the mirror arrangements (13a, 13b) are twistable and/or pivotable relative to one another at the same time by way of the respective adjustment device (14a, 14b).

6. Laser cutting apparatus (3) according to any one of the preceding claims, **characterized by** the following features:
- provision is made of a telescope device (6);
- the telescope device (6) is arranged between the laser device (4) and the laser beam deflection apparatus (13) and embodied to change the focusing of the laser beam (5), as a result of which it is possible to cut shielded leads (1) with different diameters and/or as a result of which it is possible to displace a cutting position along the central axis (11).

7. Laser cutting apparatus (3) according to any one of the preceding claims, **characterized by** the following features:
- the laser inlet opening (9b) has a greater cross section than the cable introduction opening (9a);
- the circumferential mirrored wall (9) preferably tapers in conical or funnel-shaped fashion, at least over a partial length along the central axis (11) from the laser inlet opening (9b) to the cable introduction opening (9a).

8. Laser cutting apparatus according to Claim 7, **characterized by** the following features:
- the circumferential mirrored wall (9) has a concave or convex profile; and/or
- the circumferential mirrored wall (9) is subdivided into a plurality of completely circumferential segments (9₁, 9₂, ..., 9ₙ), which are arranged adjacent to one another along the central axis (11), wherein two adjacent circumferential segments (9₁, 9₂, ..., 9ₙ) converge at an angle, as a result of which
a) a laser beam (5) that strikes a circumferential segment (9₁, 9₂, ..., 9ₙ) is reflected at another point, lying offset along the central axis (11), on the shielded lead (1) in comparison with a laser beam (5) that strikes a different circumferential segment (9₁, 9₂, ..., 9ₙ);
and/or
b) a laser beam (5) that strikes a circumferential segment (9₁, 9₂, ..., 9ₙ) is reflected on the shielded lead (1) at a different angle in comparison with a laser beam (5) that strikes a different circumferential segment (9₁, 9₂, ..., 9ₙ).

9. Laser cutting apparatus (3) according to Claim 8, **characterized by** the following features:
- at least one or all of the circumferential segments (9₁, 9₂, ..., 9ₙ) have a conical frustumshaped design; and/or
- at least one or all of the circumferential segments (9₁, 9₂, ..., 9ₙ) are subdivided into a plurality of m facets (9_{1A}, 9_{1B}, 9_{1C} or 9_{2A}, 9_{2B}, 9_{2C}) arranged next to one another in the circumferential direction such that at least one or all of the circumferential segments (9₁, 9₂, ..., 9ₙ) have an m-gon cross section, with m ≥ 3 or m ≥ 4 or m ≥ 5 or m ≥ 6 or m ≥ 7 or m ≥ 8 or m ≥ 9 or m ≥ 10.

10. Laser cutting apparatus (3) according to any one of the preceding claims, **characterized by** the following features:
- provision is made of a transport device (22);
- the transport device (22) is embodied to hold the shielded lead (1) and convey the latter through the cable introduction opening (9a) into the cutting chamber (10);
- the transport device (22) and the ring mirror device (8) are arranged
a) so as to be non-displaceable relative to one another; and/or
b) in stationary fashion
during the laser cutting.

11. Laser cutting apparatus (3) according to any one of the preceding claims, **characterized by** the following features:
- provision is made of a fastening housing (15);
- the ring mirror device (8) is arranged in the fastening housing (15);
- the fastening housing (15) has a first housing opening (15a), by means of which the cable introduction opening (9a) is accessible;
- the fastening housing (15) has a second housing opening (15b), by means of which the laser inlet opening (9b) is accessible;
a) the second housing opening (15b) is sealed by an optical window (16), which comprises a quartz glass in particular, wherein the optical window (16) is transparent to the wavelength of the laser beam (5) and
aa) wherein the optical window (16) has an opening (17) in the centre, an end of the shielded lead (1) being introducible into said opening for centration purposes; or
bb) wherein a centration and/or holding device (18) is fastened to the optical window (16), the shielded lead (1) being introducible into the former for fastening purposes;
and/or
b) at least one nozzle device (20) is arranged in the region of the second housing opening (15b), said nozzle device being embodied to blow air or a process gas onto the circumferential mirrored wall (9);
and/or
c) at least one suction apparatus (21) is arranged in the region of the first housing opening (15a), said suction apparatus being embodied to suck up the emissions and/or cut pieces of the shielded lead (1) that arise from the laser cutting process.

12. Laser cutting apparatus (3) according to Claim 11, **characterized by** the following features:
- the nozzle device (20) is a ring nozzle and the process gas is oxygen and/or nitrogen; and/or
- the suction apparatus (21) is
a) k suction nozzles that are arranged with an offset of α = 360°/k with respect to one another, with k = 2, 3, 4, 5, 6, 7, 8, 9, 10; or
b) a ring-shaped suction nozzle.

13. Laser cutting apparatus (3) according to any one of the preceding claims, **characterized by** the following features:
- the ring mirror device (8) consists of or comprises copper or glass, wherein the circumferential mirrored wall (9) is coated in order to be able to predominantly or completely reflect the laser beam (5);
- the circumferential mirrored wall (9) has a cross section which, in a plan view, has the form of a:
a) rectangle;
b) m-gon, with m ≥ 3 or m ≥ 4 or m ≥ 5 or m ≥ 6 or m ≥ 7 or m ≥ 8 or m ≥ 9 or m ≥ 10;
c) square;
d) oval;
e) circle; or
f) n-polygon, or approximates such a form.

14. Laser cutting apparatus (3) according to any one of the preceding claims, **characterized by** the following feature:
- at least one circumferential segment (9₁, 9₂, ..., 9ₙ) is subdivided into a plurality of m facets (9_{1A}, 9_{1B}, 9_{1C} or 9_{2A}, 9_{2B}, 9_{2C}) arranged next to one another in the circumferential direction such that at least one circumferential segment (9₁, 9₂, ..., 9ₙ) has an m-gon cross section, with m ≥ 3 or m ≥ 4 or m ≥ 5 or m ≥ 6 or m ≥ 7 or m ≥ 8 or m ≥ 9 or m ≥ 10, wherein each facet (9_{1A}, 9_{1B}, 9_{1C} or 9_{2A}, 9_{2B}, 9_{2C}) has a plane surface.

15. Laser cutting apparatus (3) according to any one of the preceding claims, **characterized by** the following feature:
- provision is made of a 3D capturing system by means of cameras, which is embodied to ascertain an arrangement and form of non-round leads (1) or leads (1) with a non-centric construction that allows the laser beam (5) to be guided in optimal fashion.

16. Method for laser-cutting of shielded leads (1) using a laser cutting apparatus (3) according to any one of the preceding claims, **characterized by** the following method steps:
- preparing (S₁) the shielded lead (1);
- introducing (S₂) the shielded lead (1) into the cutting chamber (10);
- actuating (S₃) the laser beam deflection apparatus (13) in such a way that the laser beam (5) enters the cutting chamber (10) through the laser inlet opening (9b) and strikes the circumferential mirrored wall (9); and
- guiding the laser beam (S₄) such that the latter moves on a trajectory along the circumferential mirrored wall (9) through 360° about the central axis (11) and is reflected onto the shielded lead (1) and cuts the shielded lead (1) along the circumference thereof.

17. Method for laser-cutting according to Claim 16, **characterized by** the following method steps:
- the preparation method step (S₁) comprises the following method steps:
a) exposing (S_{1A}) shielding wires (1b) at least in part and pressing a support crimp (2) or a support sleeve (2) on the at least partly exposed shielding wires (1b) and turning the shielding wires (1b) protruding below the support crimp (2) or the support sleeve (2) over the support crimp (2) or the support sleeve (2); and/or
b) exposing (S_{1B}) a shielding foil (1c) at least in part;
- the guiding method step (S₄) comprises the following method steps:
a) cutting (S_{4A}) the shielding wires (1b) that are arranged over the support crimp (2) or the support sleeve (2) to a predetermined length; and/or
cutting (S_{4B}) the shielding foil (1c) at a predetermined location.

## Revendications

1. Système de découpe au laser (3) pour câbles blindés (1), notamment destiné à la découpe au laser de fils de blindage (1b) et/ou de films de blindage (1c) sur des câbles blindés (1), ayant les caractéristiques suivantes :
- au moins un dispositif à laser (4) est présent, lequel est configuré pour générer un rayon laser (5) ;
- un dispositif à miroir annulaire (8) est présent, lequel possède une paroi en miroir (9) circonférentielle qui délimite un espace de découpe (10) et qui est traversée par un axe central (11) ;
- la paroi en miroir (9) circonférentielle est ouverte au niveau de ses côtés frontaux (9a, 9b), moyennant quoi une ouverture d'introduction de câble (9a) est formée au niveau du premier côté frontal (9a) et une ouverture d'entrée de laser (9b) est formée au niveau du deuxième côté frontal (9b), qui se trouve à l'opposé du premier côté frontal (9a), l'espace de découpe (10) étant accessible par le biais de ces ouvertures (9a, 9b) depuis l'extérieur de la paroi en miroir (9) circonférentielle ;
- un câble blindé (1) à découper avec le rayon laser (5) peut être disposé dans l'espace de découpe (10) le long de l'axe central (11) ;
- la paroi en miroir (9) circonférentielle est configurée pour réfléchir le rayon laser (5) en direction du câble blindé (1), la paroi en miroir (9) circonférentielle s'étendant sur 360° autour de l'axe central (11) ;
- un système de déviation de rayon laser (13) est en outre présent, lequel est configuré pour guider le rayon laser (5) de telle sorte que le rayon laser (5) pénètre dans l'espace de découpe (10) à travers l'ouverture d'entrée de laser (9b) et vient frapper la paroi en miroir (9) circonférentielle ;
- le système de déviation de rayon laser (13) est en outre configuré pour guider le rayon laser (5) de telle sorte que celui-ci se déplace sur une trajectoire le long de la paroi en miroir (9) circonférentielle sur 360° autour de l'axe central (11), moyennant quoi le câble blindé (1), qui peut être disposé dans la zone de l'axe central (11) à l'intérieur de l'espace de découpe (10), peut être découpé le long de la totalité de son pourtour par le rayon laser (5) réfléchi sur la paroi en miroir (9) circonférentielle ;
**caractérisé par** la caractéristique suivante :
- la paroi en miroir (9) circonférentielle est segmentée, moyennant quoi la trajectoire autour de laquelle peut se déplacer le rayon laser (5) le long de la paroi en miroir (9) circonférentielle sur 360° autour de l'axe central (11) est interrompue.

2. Système de découpe au laser (3) selon la revendication 1, **caractérisé par** les caractéristiques suivantes :
- le système de déviation de rayon laser (13) comporte au moins un premier arrangement de miroirs (13a) et un deuxième arrangement de miroirs (13b), ainsi qu'au moins un premier dispositif de positionnement (14a) et un deuxième dispositif de positionnement (14b) ;
- les arrangements de miroirs (13a, 13b) sont disposés dans le trajet de rayon du rayon laser (5) et sont configurés pour réfléchir le rayon laser (5) du premier arrangement de miroirs (13a) vers le deuxième arrangement de miroirs (13b) et du deuxième arrangement de miroirs (13b) ou du dernier arrangement de miroirs (13b) vers la paroi en miroir (9) circonférentielle ;
- le premier dispositif de positionnement (14a) est configuré pour faire tourner et/ou pivoter le premier arrangement de miroirs (13a) de telle sorte que le rayon laser (5) est positionné ou déplacé principalement ou exclusivement le long
a) de l'axe Y ; ou
b) de l'axe Z,
- le deuxième dispositif de positionnement (14b) est configuré pour faire tourner et/ou pivoter le deuxième arrangement de miroirs (13b) de telle sorte que le rayon laser (5) est positionné ou déplacé principalement ou exclusivement le long
a) de l'axe Z ; ou
b) de l'axe Y,
- l'axe Y et l'axe Z se trouvent à un angle de 90° l'un par rapport à l'autre et à un angle de 90° par rapport à l'axe X, l'axe X suivant un tracé le long de l'axe central (11).

3. Système de découpe au laser (3) selon la revendication 2, **caractérisé par** la caractéristique suivante :
- l'axe central (11) de la paroi en miroir (9) circonférentielle suit un tracé à travers le deuxième arrangement de miroirs (13b) ou le dernier arrangement de miroirs (13b).

4. Système de découpe au laser (3) selon la revendication 2 ou 3, **caractérisé par** la caractéristique suivante :
- le premier arrangement de miroirs (13a) et le deuxième arrangement de miroirs (13b) sont disposés décalés l'un de l'autre uniquement dans
a) la direction Y ; ou
b) la direction Z ; ou
c) la direction Z et la direction Y.

5. Système de découpe au laser (3) selon l'une des revendications 2 à 4, **caractérisé par** la caractéristique suivante :
- les arrangements de miroirs (13a, 13b) peuvent être amenés à tourner et/ou à pivoter simultanément l'un par rapport à l'autre par le dispositif de positionnement (14a, 14b) respectif.

6. Système de découpe au laser (3) selon l'une des revendications précédentes, **caractérisé par** les caractéristiques suivantes :
- un dispositif télescopique (6) est présent ;
- le dispositif télescopique (6) est disposé entre le dispositif à laser (4) et le système de déviation de rayon laser (13) et configuré pour modifier la concentration du rayon laser (5), moyennant quoi il est possible de découper des câbles blindés (1) ayant des diamètres différents et/ou moyennant quoi il est possible de décaler une position de découpe le long de l'axe central (11).

7. Système de découpe au laser (3) selon l'une des revendications précédentes, **caractérisé par** les caractéristiques suivantes :
- l'ouverture d'entrée de laser (9b) présente une section transversale supérieure à celle de l'ouverture d'introduction de câble (9a) ;
- la paroi en miroir (9) circonférentielle se réduit de préférence en forme de cône ou d'entonnoir au moins sur une longueur partielle le long de l'axe central (11) de l'ouverture d'entrée de laser (9b) vers l'ouverture d'introduction de câble (9a).

8. Système de découpe au laser selon la revendication 7, **caractérisé par** les caractéristiques suivantes :
- la paroi en miroir (9) circonférentielle présente un tracé concave ou convexe ; et/ou
- la paroi en miroir (9) circonférentielle est divisée en plusieurs segments circonférentiels (9₁, 9₂, ..., 9ₙ) entiers qui sont disposés les uns à côté des autres le long de l'axe central (11), deux segments circonférentiels (9₁, 9₂, ..., 9ₙ) voisins s'approchant l'un de l'autre sous un certain angle, moyennant quoi
a) un rayon laser (5) qui est incident sur un segment circonférentiel (9₁, 9₂, ..., 9ₙ) est réfléchi sur le câble blindé (1) au niveau d'un point différent, qui est décalé le long de l'axe central (11), en comparaison d'un rayon laser (5) qui est incident sur un autre segment circonférentiel (9₁, 9₂, ..., 9ₙ) ;
et/ou
b) un rayon laser (5) qui est incident sur un segment circonférentiel (9₁, 9₂, ..., 9ₙ) est réfléchi sur le câble blindé (1) sous un angle différent en comparaison d'un rayon laser (5) qui est incident sur un autre segment circonférentiel (9₁, 9₂, ..., 9ₙ).

9. Système de découpe au laser (3) selon la revendication 8, **caractérisé par** les caractéristiques suivantes :
- au moins l'un ou la totalité des segments circonférentiels (9₁, 9₂, ..., 9ₙ) sont réalisés sous la forme d'un cône tronqué ; et/ou
- au moins l'un ou la totalité des segments circonférentiels (9₁, 9₂, ..., 9ₙ) sont divisés en plusieurs m facettes (9_{1A}, 9_{1B}, 9_{1C} ou 9_{2A}, 9_{2B}, 9_{2C}) disposées les unes à côté des autres dans le sens périphérique, de sorte qu'au moins l'un ou la totalité des segments circonférentiels (9₁, 9₂, ..., 9ₙ) possèdent une section transversale à m sommets, avec m ≥ 3 ou m ≥ 4 ou m ≥ 5 ou m ≥ 6 ou m ≥ 7 ou m ≥ 8 ou m ≥ 9 ou m ≥ 10.

10. Système de découpe au laser (3) selon l'une des revendications précédentes, **caractérisé par** les caractéristiques suivantes :
- un dispositif de transport (22) est présent ;
- le dispositif de transport (22) est configuré pour maintenir le câble blindé (1) et pour le faire passer à travers l'ouverture d'introduction de câble (9a) dans l'espace de découpe (10) ;
- pendant la découpe au laser, le dispositif de transport (22) et le dispositif à miroir annulaire (8) sont disposés
a) de manière non coulissante l'un par rapport à l'autre ; et/ou
b) en position fixe.

11. Système de découpe au laser (3) selon l'une des revendications précédentes, **caractérisé par** les caractéristiques suivantes :
- un boîtier de fixation (15) est présent ;
- le dispositif à miroir annulaire (8) est disposé dans le boîtier de fixation (15) ;
- le boîtier de fixation (15) possède une première ouverture de boîtier (15a) par le biais de laquelle l'ouverture d'introduction de câble (9a) est accessible ;
- le boîtier de fixation (15) possède une deuxième ouverture de boîtier (15b) par le biais de laquelle l'ouverture d'entrée de laser (9b) est accessible ;
a) la deuxième ouverture de boîtier (15b) est fermée par une fenêtre optique (16), qui comporte notamment un verre de quartz, la fenêtre optique (16) étant transparente pour la longueur d'onde du rayon laser (5)
et
aa) la fenêtre optique (16) possédant une ouverture (17) au centre, dans laquelle peut être introduite une extrémité du câble blindé (1) en vue du centrage ; ou
bb) un dispositif de centrage et/ou de maintien (18) étant fixé à la fenêtre optique (16), dans lequel le câble blindé (1) peut être introduit pour sa fixation ; et/ou
b) au moins un dispositif à buse (20) est disposé dans la zone de la deuxième ouverture de boîtier (15b), lequel est configuré pour souffler de l'air ou un gaz de processus sur la paroi en miroir (9) circonférentielle ;
et/ou
c) au moins un système d'aspiration (21) est disposé dans la zone de la première ouverture de boîtier (15a), lequel est configuré pour aspirer les émissions produites par le processus de découpe au laser et/ou les parties découpées du câble blindé (1).

12. Système de découpe au laser (3) selon la revendication 11, **caractérisé par** les caractéristiques suivantes :
- le dispositif à buse (20) est une buse annulaire et le gaz de processus est de l'oxygène et/ou de l'azote ; et/ou
- le système d'aspiration (21) se compose de
a) k manchons d'aspiration qui sont disposés décalés de α = 360°/k les uns par rapport aux autres, avec k = 2, 3, 4, 5, 6, 7, 8, 9, 10 ; et/ou
b) un manchon d'aspiration annulaire.

13. Système de découpe au laser (3) selon l'une des revendications précédentes, **caractérisé par** les caractéristiques suivantes :
- le dispositif à miroir annulaire (8) se compose de ou comprend du cuivre ou du verre, la paroi en miroir (9) circonférentielle étant revêtue afin de pouvoir réfléchir majoritairement ou entièrement le rayon laser (5) ;
- la paroi en miroir (9) circonférentielle possède une section transversale qui, vue de dessus, présente la forme d'un
a) rectangle ;
b) polygone à m sommets, avec m ≥ 3 ou m ≥ 4 ou m ≥ 5 ou m ≥ 6 ou m ≥ 7 ou m ≥ 8 ou m ≥ 9 ou m ≥ 10 ;
c) carré
d) ovale ;
e) cercle ; ou
f) polygone à n côtés, ou s'approche d'une telle forme.

14. Système de découpe au laser (3) selon l'une des revendications précédentes, **caractérisé par** la caractéristique suivante :
- au moins un segment circonférentiel (9₁, 9₂, ..., 9ₙ) est divisé en plusieurs m facettes (9_{1A}, 9_{1B}, 9_{1C} ou 9_{2A}, 9_{2B}, 9_{2C}) disposées les unes à côté des autres dans le sens périphérique, de sorte qu'au ledit segment circonférentiel (9₁, 9₂, ..., 9ₙ) possède une section transversale à m sommets, avec m ≥ 3 ou m ≥ 4 ou m ≥ 5 ou m ≥ 6 ou m ≥ 7 ou m ≥ 8 ou m ≥ 9 ou m ≥ 10, chaque facette (9_{1A}, 9_{1B}, 9_{1C} ou 9_{2A}, 9_{2B}, 9_{2C}) possédant une surface plane.

15. Système de découpe au laser (3) selon l'une des revendications précédentes, **caractérisé par** la caractéristique suivante :
- un système d'acquisition 3D au moyen de caméras est présent, lequel est configuré pour déterminer un arrangement et une forme de câbles (1) non ronds ou de câbles (1) ayant une structure non centrée, moyennant quoi le rayon laser (5) peut être guidé de manière optimale.

16. Procédé de découpe au laser de câbles blindés (1) avec un système de découpe au laser (3) selon l'une des revendications précédentes, **caractérisé par** les étapes de procédé suivantes :
- préparation (S₁) du câble blindé (1) ;
- introduction (S₂) du câble blindé (1) dans l'espace de découpe (10) ;
- commande (S₃) du système de déviation de rayon laser (13) de telle sorte que le rayon laser (5) pénètre dans l'espace de découpe (10) à travers l'ouverture d'entrée de laser (9b) et vient frapper la paroi en miroir (9) circonférentielle ; et
- guidage du rayon laser (S₄) de telle sorte que celui-ci se déplace sur une trajectoire le long de la paroi en miroir (9) circonférentielle sur 360° autour de l'axe central (11) et est réfléchi sur le câble blindé (1) et découpe le câble blindé (1) le long de son pourtour.

17. Procédé de découpe au laser selon la revendication 16, **caractérisé par** les étapes de procédé suivantes :
- l'étape de procédé de préparation (S₁) comprend les étapes de procédé suivantes :
a) libération (S_{1A}) au moins partielle des fils de blindage (1b) et pressage d'une pièce à sertir de support (2) ou d'une douille de support (2) sur les fils de blindage (1b) au moins partiellement libérés et retournement des fils de blindage (1b) qui dépassent sous la pièce à sertir de support (2) ou la douille de support (2) au-dessus de la pièce à sertir de support (2) ou de la douille de support (2) ; et/ou
b) libération (S_{1B}) au moins partielle d'un film de blindage (1c) ;
- l'étape de procédé de guidage (S₄) comprend les étapes de procédé suivantes :
a) découpe (S_{4A}) des fils de blindage (1b) qui sont disposés au-dessus de la pièce à sertir de support (2) ou de la douille de support (2) sur une longueur prédéterminée ; et/ou
découpe (S_{4B}) du film de blindage (1c) à un endroit prédéterminé.
